# EUROPÄISCHE PATENTSCHRIFT

(11) **EP 2 462 388 B1**
(45) Veröffentlichungstag und Bekanntmachung des Hinweises auf die Patenterteilung: **16.11.2016**
(21) Anmeldenummer: 10741942.6
(22) Anmeldetag: 06.08.2010
(51) Int. Cl.: F25B 17/08, F25B 49/04, F16K 11/076, F25B 35/04

(54) **ROTATIONSVENTIL UND WÄRMEPUMPE**
ROTATING VALVE AND HEAT PUMP
VANNE DE ROTATION ET POMPE À CHALEUR

(30) Priorität: 07.08.2009 DE 102009036544
(43) Veröffentlichungstag der Anmeldung: 13.06.2012
(73) Patentinhaber: MAHLE Behr GmbH & Co. KG, 70469 Stuttgart (DE)
(72) Erfinder: BURK, Roland, 70469 Stuttgart (DE)
(74) Vertreter: Grauel, Andreas
(86) Internationale Anmeldenummer: PCT/EP2010/061470
(87) Internationale Veröffentlichungsnummer: WO 2011/015648

(56) Entgegenhaltungen:
- EP-A1- 1 428 990
- WO-A1-02/12800
- WO-A1-2004/059221
- WO-A1-2007/068481
- WO-A1-2009/024412
- WO-A1-2009/024580
- WO-A2-98/50739
- US-A- 4 574 874

## Beschreibung

Die Erfindung betrifft ein Rotationsventil nach dem Oberbegriff des Anspruchs 1 sowie eine Wärmepumpe nach dem Oberbegriff des Anspruchs 10.

Zur wechselnden Verschaltung einer Mehrzahl von Fluidströmen zur Ansteuerung einer Wärmepumpe mit einer Vielzahl von jeweils thermodynamisch aktiven Strömungskanälen ist grundsätzlich die Verwendung von Rotationsventilen bekannt.

WO 2007/068481 A1 beschreibt eine Wärmepumpe aus einem fest miteinander verbundenen Stapel von plattenartigen Hohlelementen, wobei die Hohlelemente Adsorber-Desorber-Bereiche umfassen und jeweils ein Hohlelement einen Strömungskanal darstellt. Die Mehrzahl von Strömungskanälen werden über endseitig der Hohlelemente angeordnete Paare von Rotationsventilen wechselnd seriell miteinander verschaltet, um eine Optimierung der Leistung der Wärmepumpe bei gegebener Baugröße zu erzielen.

Eine solche im Sinne der Erfindung gattungsgemäße Wärmepumpe hat viele mögliche Anwendungen, z. B. die Abwärmenutzung in Stationärtechnik, z. B. Gebäudetechnik, solare Klimatisierung oder auch Standklimaanlagen für Fahrzeuge, insbesondere Nutzkraftwagen.

Es ist die Aufgabe der Erfindung, ein Rotationsventil sowie eine Wärmepumpe hinsichtlich Baugröße, Baukosten und Leistungsfähigkeit weiter zu verbessern.

Diese Aufgabe wird für ein eingangs genanntes Rotationsventile erfindungsgemäß mit den kennzeichnenden Merkmalen des Anspruchs 1 gelöst. Durch die Realisierung des Schaltglieds des Rotationsventils mit axial gerichteten Öffnungen wird eine effektive und besonders kleinbauende Lösung zur wechselnden Verschaltungen der Fluidströme bereitgestellt. Aus dem eingangs genannten Stand der Technik sind lediglich radial gerichtete Strömungsöffnungen im Bereich der wechselnden Verschaltung bekannt, was zumindest hinsichtlich des Bauraums zu aufwendigen Lösungen führt, z. B. doppelwandige Zylinder mit darin radial gerichtet angeordneten, zueinander versetzten Öffnungen.

Ein erfindungsgemäßes Rotationsventil ist nicht nur zur Steuerung einer Mehrzahl von Fluidströmen unterschiedlicher Temperaturen für eine Wärmepumpe, zum Beispiel zur Rückgewinnung von Wärme', geeignet, sondern im Allgemeinen zur wechselnden Verschaltung von Fluidströmen, z. B. auch zur Rückgewinnung von Inhaltsstoffen einer Lösung z. B. bei chemischen Reaktoren.

In zweckmäßiger Detailgestaltung ist dabei das Schaltglied als ein axialer Längskörper ausgebildet, der in einer ortsfesten, im Wesentlichen zylindrischen Wandung aufgenommen ist, wobei entweder die Zuführungen oder die Abführungen über radial gerichtete Öffnungen der Wandung angebunden sind. Hierdurch lässt sich insbesondere für den Anschluss eines Stapels aus parallelen Strömungskanälen eine geeignete Anordnung der Zuführungen bzw. Abführungen in insbesondere gleichmäßig beabstandeter, gerader Linie erreichen.

Besonders bevorzugt hat der Längskörper dabei eine der Mehrzahl von Zuführungen entsprechende Anzahl axial gerichteter, separater Kanäle für die Fluidströme, wobei jeder Kanal eine radiale Öffnung zur Verbindung mit einer der Öffnungen der Wandung aufweist. Die axialen separaten Kanäle können z. B. durch axial längsgerichtete Bohrungen hergestellt sein. Insbesondere können die Kanäle gerade und parallel verlaufen, so dass auf eine aus dem Stand der Technik bekannte Wendelung der Kanäle verzichtet werden kann.

Besonders vorteilhaft ist zur Vermeidung der Mischung benachbarter Fluidströme vorgesehen, dass zumindest eines von beiden, Längskörper oder Wandung, ringförmig umlaufende Dichtglieder aufweist, die dichtend mit dem jeweils anderen der beiden, Längskörper oder Wandung, zusammenwirken, so dass die axial versetzten Öffnungen der Wandung voneinander separiert sind. Bevorzugt sind dabei im Interesse einer einfachen Herstellung ringförmige Dichtmittel an radialen Vorsprüngen von zumindest einem von beiden, Längskörper oder Wandung, aufgenommen. Alternativ oder ergänzend können die Dichtmittel auch einstückig mit dem Längskörper und/oder der Wandung ausgebildet sein. Bei einer geeigneten Materialwahl von Längskörper und Wandung kann das Material des entsprechenden Bauteils zugleich dichtende Wirkung haben, zum Beispiel bei geeigneter Wahl von Materialpaarungen aus Kunststoffen oder Kunststoff und Metall. Eine einstückige Ausbildung von Dichtungen an dem jeweiligen Bauteil kann auch in dem Sinne vorgesehen werden, dass die Dichtungen aus einem anderen Material als das Bauteil an dieses angespritzt werden.

Bei einer ersten vorteilhaften Ausführungsform der Erfindung ist der Längskörper als im Wesentlichen einstückiges Bauteil ausgeformt. Dies kann z. B. ein Spritzguß-Formteil aus einem Kunststoff sein, das insbesondere durch einen oder mehrere Schritte der Nachbearbeitung, z. B. durch Anbringung von Bohrungen für längsgerichtete Kanäle, nachbearbeitet ist.

In einer geeigneten alternativen Ausführungsform kann der Längskörper auch als Mehrzahl von in axialer Richtung gestapelten Längskörperelementen ausgebildet sein. Eine solche Aufteilung in mehrere Längskörperelemente ermöglicht eine modulare Bauweise, die an verschiedene Anzahlen von Strömungskanälen im Sinne eines Gleichteilekonzepts auf einfache Weise anpassbar ist. Bevorzugt sind dabei zumindest einige der Längskörperelemente als Gleichteile ausgebildet.
Bei einer weiteren bevorzugten Ausführungsform ist das Schaltglied in axialer Richtung von einer drehbaren Welle durchgriffen, wobei die Welle in bevorzugter Detailgestaltung als Zuganker zur Halterung mehrere axial hintereinander angeordneter Bauteile des Schaltglieds ausgebildet ist. Hierdurch lässt sich das Schaltglied auf einfache Weise zu Zwecken der Wartung oder des Austauschs von verschließenden Teilen demontieren.

In bevorzugter Detailgestaltung ist das Schaltglied endseitig über ein Lagerglied drehbar gelagert, wobei insbesondere das Lagerglied eine Rotationsdichtung zur Abdichtung des Fluids aufweist. Allgemein ist hierdurch eine genaue Führung des Schaltglieds unter Reduzierung von Reibungskräften ermöglicht, wobei die Rotationsdichtung eine zusätzliche Absperrung gegen Fluidleckagen darstellt, die insbesondere bei gesundheits- oder umweltgefährdenden Fluiden sinnvoll ist. Zweckmäßig kann am gegenüberliegenden Ende des Schaltglieds jeweils ein Lagerglied vorgesehen sein.

Ein erfindungsgemäßes Rotationsventil ist besonders zur Verschaltung einer großen Anzahl von Zuführungen und Abführungen geeignet, so dass in einer bevorzugten Ausführungsform jeweils zumindest vier, insbesondere zumindest acht Zuführungen und Abführungen vorliegen.

Die Aufgabe der Erfindung wird für eine eingangs genannte Wärmepumpe mit den kennzeichnenden Merkmalen des Anspruchs 10 gelöst. Die Kombination eines erfindungsgemäßen Rotationsventils mit einer Wärmepumpe ist besonders vorteilhaft, da durch die Optimierung des Rotationsventils hinsichtlich Dichtheit oder Baugröße auch die Eigenschaften der Wärmepumpe hinsichtlich Baugröße oder Leistung verbessert werden.

Ferner kann durch eine Ausbildung der Hohlelemente als jeweiliger Stapel von mehreren parallelen Lagen von Unterelementen ein besonders guter Wärmeübergang zwischen dem umströmenden Fluid und den thermodynamisch aktiven Bereichen der Hohlelemente gewährleistet werden. Hierdurch kann die Leistung der Wärmepumpe bei gegebenem Bauraum vergrößert werden.

Im Regelfall werden das mit der ersten Zone im Austausch stehende erste Fluid und das mit der zweiten Zone,im Austausch stehende zweite Fluid verschieden voneinander sein und keine Verbindung in den Kreisläufen aufweisen. Je nach Anforderungen kann es sich im Sinne der Erfindung auch um stofflich identische Fluide handeln, die je nach Ausgestaltung auch eine Verbindung miteinander aufweisen können.

Bei einer bevorzugten Ausführungsform der Wärmepumpe sind die Hohlelemente als Adsorberelemente ausgebildet, welche im Bereich der ersten Zone einen Adsorptions/Desorptionsbereich für das Arbeitsmittel aufweisen und im Bereich der zweiten Zone einen Kondensations/Verdampfungsbereich für das Arbeitsmittel. Je nach Einsatzbereich, der Wärmepumpe können Arbeitsmittel und Adsorptions/Desorptionsmittel unterschiedlich gewählt sein.

In bevorzugter Detailgestaltung hat zumindest einer der Strömungskanäle endseitige Anschlussstücke, wobei das Fluid im Bereich der Anschlussstücke auf eine Mehrzahl von Strömungswege verteilt wird. In zweckmäßiger Detailgestaltung können auf einfache Weise ein oder mehrere Strömungswege für das Fluid durch einen oder mehrere Spalte zwischen aufeinander angeordneten Unterelementen ausgebildet sein. In einer bevorzugten Detailgestaltung können die Spalte mit oberflächenvergrößernden inneren Strukturen versehen sein.

Bei einer besonders bevorzugten Ausführungsform sind die Hohlelemente jeweils als separate Module ausgebildet, die insbesondere nicht in thermischem Kontakt miteinander stehen. Auf diese Weise wird ein ungewünschter Austausch von Wärmeenergie zwischen benachbarten Strömungswegen verringert. Dies ist insbesondere für solche benachbarten Strömungswege wichtig, die eine aufgrund der aktuellen Verschaltung hohe Temperaturdifferenz zueinander aufweisen. In bevorzugter Weiterbildung kann dabei zwischen benachbarten Hohlelementen eine Schicht aus einem thermisch isolierenden, insbesondere elastischen Material angeordnet sein. Z. B. kann dies ein geschäumter Kunststoff oder eine faserige Dämmmatte sein.

Bei einer möglichen Ausführungsform der Erfindung kann die Ventilanordnung als Verschaltung einer Anzahl von diskreten, insbesondere elektromagnetisch betätigten Mehrwegeventilen ausgebildet sein. Besonders bei Wärmepumpen mit einer relativ kleinen Anzahl von Strömungswegen kann eine solche Verschaltung von diskreten Ventilen zweckmäßig sein, wobei insbesondere bei zunehmender Anzahl von Strömungswegen erfindungsgemäße Rotationsventile vorteilhaft sind.

Bei einer besonders bevorzugten Ausführungsform umfasst die Ventilanordnung zumindest ein, insbesondere zumindest zwei Rotationsventile nach einem der Ansprüche 1 bis 9, da durch die erfindungsgemäßen Rotationsventile die Fluidströme kostengünstig und zuverlässig geschaltet werden können.

In einer vorteilhaften Detailgestaltung sind zumindest einige der Strömungskanäle der Hohlelemente über elastische deformierbare Anschlussstücke mit den Zuführungen und/oder Abführungen des Rotationsventils verbunden. Hierdurch können thermisch bedingte Ausdehnungen der Wärmepumpe auf einfache Weise kompensiert werden, was insbesondere bei großen Stapeln von Hohlelementen sinnvoll ist.

Bei einer besonders bevorzugten Ausführungsform der Erfindung besteht das zweite Fluid aus Luft. Hierdurch kann Luft zum Zwecke der Konditionierung wie etwa Erwärmung oder Abkühlung unmittelbar über die Hohlelemente insbesondere der zweiten Zone geleitet werden. Je nach Auslegung und Betriebsart der Wärmepumpe kann dabei der Luftstrom zur Heizung oder Kühlung zum Beispiel eines Gebäudes oder Fahrzeugs verwendet werden. Die Luft kann im Sinne der Erfindung aber auch ganz allgemein als ein wärmetransportierendes Medium betrachtet werden, ohne dass sie Verwendung als konditionierte Umgebungsluft z.B. für Menschen oder technischen Einrichtungen verwendet wird.

Bei einer erfindungsgemäßen und bevorzugten Ausführungsform verfügt das Rotationsventil des zweiten Fluids über ein Schaltglied mit einer stufig gewendelten Trennwand, wobei insbesondere eine Anzahl von Stufen der Wendelung einer Anzahl von Hohlelementen entspricht. Hierdurch kann ein solches Schaltglied mit einem nur einwandigen umhüllenden Zylinder kombiniert werden, ohne dass eine relativ aufwendig herzustellende kontinuierliche Wendelung der Trennwände vorgesehen werden muss. Eine solche Bauform ist insbesondere für gasförmige Fluide wie Luft bei hohen Volumenströmen und zugleich kleinen Druckdifferenzen gewünscht, da Maßnahmen wie zum Beispiel Ringkammern von doppelwandigen Außenzylindern hier störend wirken könnten. Im Interesse einer besonders einfachen Herstellung ist das Schaltglied dabei aus einer Mehrzahl von insbesondere als Gleichteilen ausgebildeten, axial hintereinander angeordneten Schaltgliedelementen ausgebildet.

Bei einem weiteren vorteilhaften Ausführungsbeispiel der Erfindung wird das zweite Fluid über ein Rotationsventil mit zwei Strömungskanälen über die zweiten Zonen (B) der Hohlelemente verteilt. Eine solche Verteilung über nur zwei Kanäle ist besonders für gasförmige Fluide von relativ geringer Wärmekapazität wie etwa Luft vorteilhaft, da sich hierdurch große Strömungsquerschnitte und somit große Volumenströme bei kleiner Druckdifferenz realisieren lassen.

Weitere Merkmale und Vorteile der Erfindung ergeben sich aus den nachfolgend beschriebenen Ausführungsbeispielen sowie aus den abhängigen Ansprüchen.

Nachfolgend werden mehrere bevorzugte Ausführungsbeispiele der Erfindung beschrieben und anhand der anliegenden Zeichnungen näher erläutert.
- Fig. 1: zeigt eine räumliche Gesamtansicht einer erfindungsgemäßen Wärmepumpe.
- Fig. 2: zeigt eine Explosionsansicht der Wärmepumpe aus Fig. 1.
- Fig. 3: zeigt eine Draufsicht auf die Wärmepumpe aus Fig. 1 von der Seite.
- Fig. 4: zeigt eine räumliche Schnittansicht eines Hohlelements der Wärmepumpe aus Fig. 1.
- Fig. 5: zeigt eine räumliche Ansicht eines Stapels aus Hohlelementen der Wärmepumpe aus Fig. 1.
- Fig. 6: zeigt eine Ausschnittsvergrößerung einer schematischen, teilweise geschnittenen räumlichen Ansicht des Stapels aus Fig. 5.
- Fig. 7: zeigt eine räumliche Explosionsdarstellung eines ersten Ausführungsbeispiels eines erfindungsgemäßen Rotationsventils.
- Fig. 8: zeigt ein drehbares Schaltglied des Rotationsventils aus Fig. 7 in einer räumlichen, teilweise geschnittenen Ansicht.
- Fig. 9: zeigt eine mehrteilig ausgebildete Abwandlung des Schaltglieds aus Fig. 8.
- Fig. 10: zeigt ein Längskörperelement des als Längskörper ausgebildeten Schaltglieds aus Fig. 9.
- Fig. 11: zeigt eine räumliche Ansicht eines Schaltglieds einer weiteren Ausführungsform eines Rotationsventils.
- Fig. 12: zeigt eine teilweise Schnittansicht eines Rotationsventils mit einem Schaltglied gemäß Fig. 11.
- Fig. 13: zeigt eine Schnittansicht durch das Rotationsventil aus Fig. 12 senkrecht zu einer Drehachse des Schaltglieds.
- Fig. 14: zeigt eine teilweise Schnittansicht einer Abwandlung des Rotationsventils aus Fig. 13.
- Fig. 15: zeigt eine teilweise geschnittene Gesamtansicht des Rotationsventils aus Fig. 12.
- Fig. 16: zeigt eine weitere teilweise aufgeschnittene Ansicht des Rotationsventils aus den Figuren Fig. 12 und Fig. 15.
- Fig. 17: zeigt eine parallel zu einer Drehachse verlaufende Schnittansicht eines weiteren Ausführungsbeispiels eines Rotationsventils.
- Fig. 18: zeigt eine Schnittansicht des Rotationsventils aus Fig. 17 entlang der Linie B-B.
- Fig. 19: zeigt eine schematische Darstellung der Schaltvorgänge eines erfindungsgemäßen Rotationsventils für den Fall von sieben Strömungskanälen.
- Fig. 20: zeigt eine schematische Schnittansicht eines weiteren Ausführungsbeispiels eines Rotationsventils in einer ersten Ventilstellung.
- Fig. 21: zeigt das Ventil aus Fig. 20 in einer zweiten Ventilstellung.
- Fig. 22: zeigt eine schematische Darstellung einer Abrollung des Rotationsventils aus Fig. 20, wobei die Abrollung insgesamt über 540° erfolgt.
- Fig. 23: zeigt eine räumliche Handskizze eines mittelteiligen Schaltgliedbauteils des Rotationsventils aus Fig. 20.
- Fig. 24: zeigt eine räumliche Handskizze eines endseitigen Schaltgliedbauteils des Rotationsventils aus Fig. 20.
- Fig. 25: eine vereinfachte Darstellung der Schaltaufgabe eines Rotationsventils gemäß einem weiteren Ausführungsbeispiel.
- Fig. 26: eine Abwicklung des Rotationsventils aus Fig. 25 in einer ersten Stellung.
- Fig. 27: das Rotationsventil aus Figur 26 in einer zweiten Stellung.
- Fig. 28: eine detaillierte Darstellung des Rotationsventils aus den Fig. 26 und 27 im Längsschnitt.
- Fig. 29: die Ansicht eines Schnitts entlang der Linie XXIX-XXIX in Fig. 28.
- Fig. 30: die Ansicht eines Schnitts entlang der Linie XXX-XXX in Fig. 28.
- Fig. 31: eine Abwicklung einer modifizierten Ausführungsform des Rotationsventils aus Fig. 26 in einer ersten Stellung.
- Fig. 32: das Rotationsventil aus Figur 31 in einer zweiten Stellung.
- Fig. 33: zeigt eine weitere Ausführungsform eines Rotationsventils unter schematisierter Darstellung seiner Schaltaufgabe.
- Fig. 34: zeigt das Rotationsventil aus Fig. 33 in einer abgewickelten Darstellung in einer ersten Schaltstellung.
- Fig. 35: zeigt eine Abwandlung des Rotationsventils aus Fig. 34.
- Fig. 36: zeigt eine schematische konstruktive Realisierung des Rotationsventils aus Fig. 35.
- Fig. 37: zeigt schematische Schnittansichten entlang der Linien A-A und B-B aus Fig. 36.
- Fig. 38: zeigt eine schematische Darstellung von Temperaturprofilen zum Rotationsventil nach Fig. 33 bis Fig. 37.

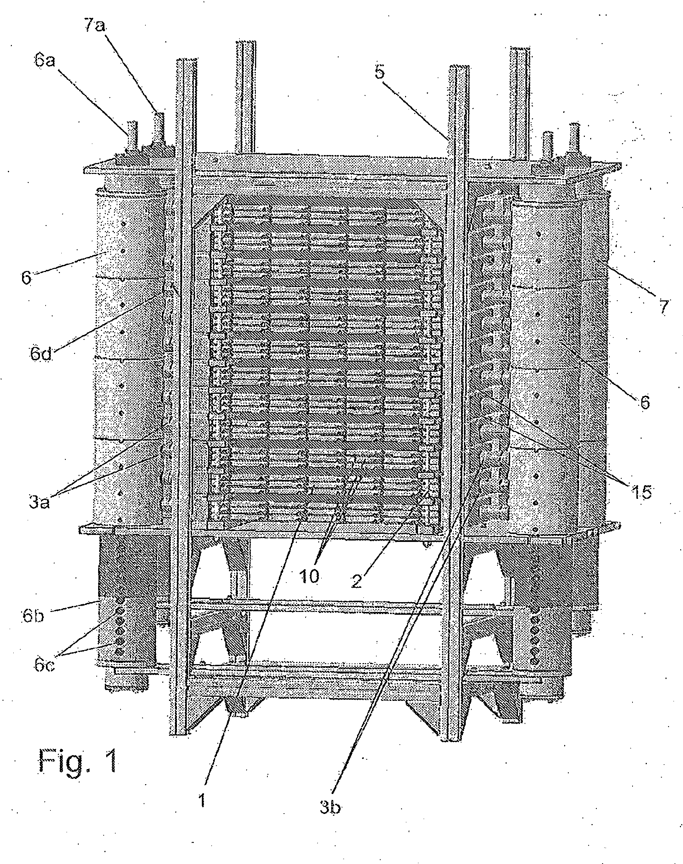

In Fig. 1 ist eine Wärmepumpe dargestellt, bei der eine Mehrzahl von vorliegend insgesamt zwölf Hohlelementen 1 nach Art eines Stapels parallel zueinander angeordnet sind. Der Stapel aus Hohlelementen 1 ist über Zuganker 2 lösbar zu einer baulichen Einheit verbunden.

Jedes der Hohlelemente 1 hat eine erste Zone A in Form einer Adsorptions/Desorptionszone und eine zweite Zone B in Form einer Verdampfungs/Kondensationszone. Die erste Zone A wird für jedes der Hohlelemente 1 von einem jeweils ersten Strömungskanal 3 eines umströmenden, über eine nicht dargestellte Pumpe geförderten ersten Fluids durchgriffen und die zweite Zone B wird für jedes der Hohlelemente 1 von einem zweiten Strömungskanal 4 eines zweiten Fluids durchgriffen, das im vorliegenden Beispiel, aber nicht notwendig, von dem ersten Fluid verschieden ist. Jeder der Strömungskanäle 3, 4 hat dabei stirnseitige Anschlüsse 3a, 3b, die sich entgegengesetzt gegenüberliegen und jeweils als Zuführungen oder Abführungen für das die Strömungskanäle 3, 4 durchströmende Fluid dienen.

Der über die Zuganker 2 zusammengehaltene Stapel aus Hohlelementen 1 ist in einem Tragrahmen 5 der Wärmepumpe angeordnet. Außenseitig des Tragrahmens 5 sind insgesamt vier Rotationsventile angeordnet und mit dem Stapel von Hohlelementen 1 verbunden, wobei zwei im Wesentlichen baugleiche Rotationsventile 6 mit den Zu- und Abführungen 3a, 3b der Sorptionsseite A verbunden sind. Zwei hiervon insbesondere bezüglich der Anzahl der im Ventil separierten Strömungskanäle im Allgemeinen abweichend gebaute, jedoch zueinander baugleiche Rotationsventile 7 sind mit der zweiten Zone bzw. Verdampfungs/Kondensationsseite B der Hohlelemente 1 verbunden.

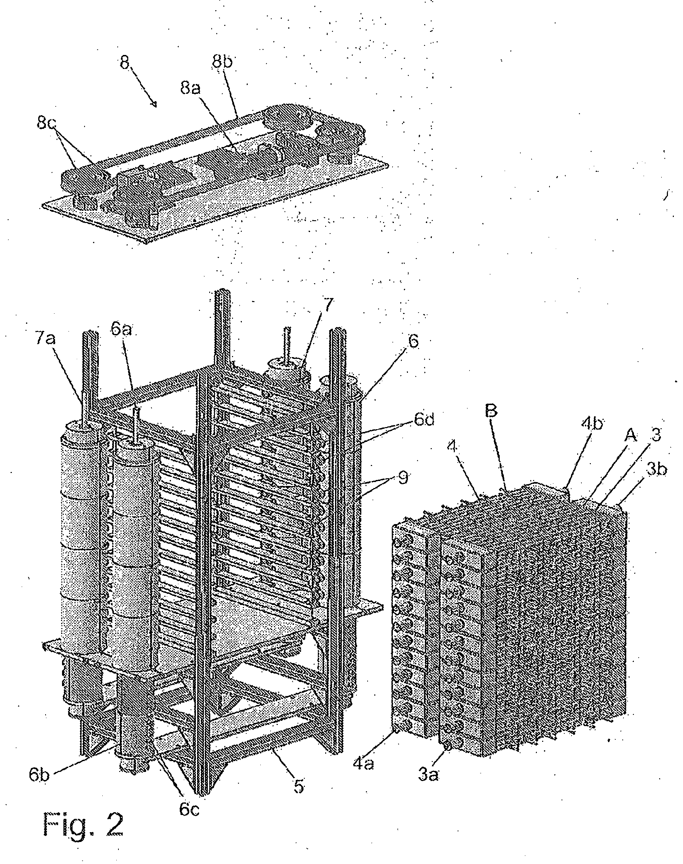

Die Rotationsventile 6. 7 sind sämtlich parallel zueinander ausgerichtet, wobei zentrale Drehwellen 6a, 7a der Rotationsventile 6, 7 mit einer modulartigen Antriebseinheit 8 verbunden sind, die in Fig. 2 schematisch dargestellt ist. Die Antriebseinheit 8 umfasst einen Elektromotor 8a, durch den über einen Zahnriemen 8b vier Antriebsräder 8c zum Antrieb der jeweiligen Achsen 7a, 6a der Rotationsventile 6, 7 synchronisiert bewegt werden. Bei der vorliegenden Konstruktion werden sämtliche Rotationsventile 6, 7 mit der gleichen Winkelgeschwindigkeit angetrieben.

Die Rotationsventile 6 der Sorptionsseite A der Hohlelemente 1 haben einen Zuführbereich 6b, der über zwölf separate Zuführungen 6c verfügt, so dass jedes der zwölf Hohlelemente 1 einem separaten Kanal innerhalb des Rotationsventils 6 entspricht. Die Rotationsventile 7 der Verdampferseite B haben eine kleinere Anzahl von nur vier separaten Zuführungen 7c in einem Zuführbereich 7b, da auf dieser Seite der Wärmepumpe in der Regel keine so stark differenzierte Trennung der Strömungskanäle notwendig ist wie auf der Sorptionsseite. Entsprechend sind jeweils mehrere der Hohlelemente 1 bezüglich ihrer zweiten Zone B mit jeweils einem der Strömungskanäle in den Ventilen 7 gleichzeitig verbunden. Hierzu wird auf die Erläuterungen im Stand der Technik WO 2007/068481 A1 verwiesen.

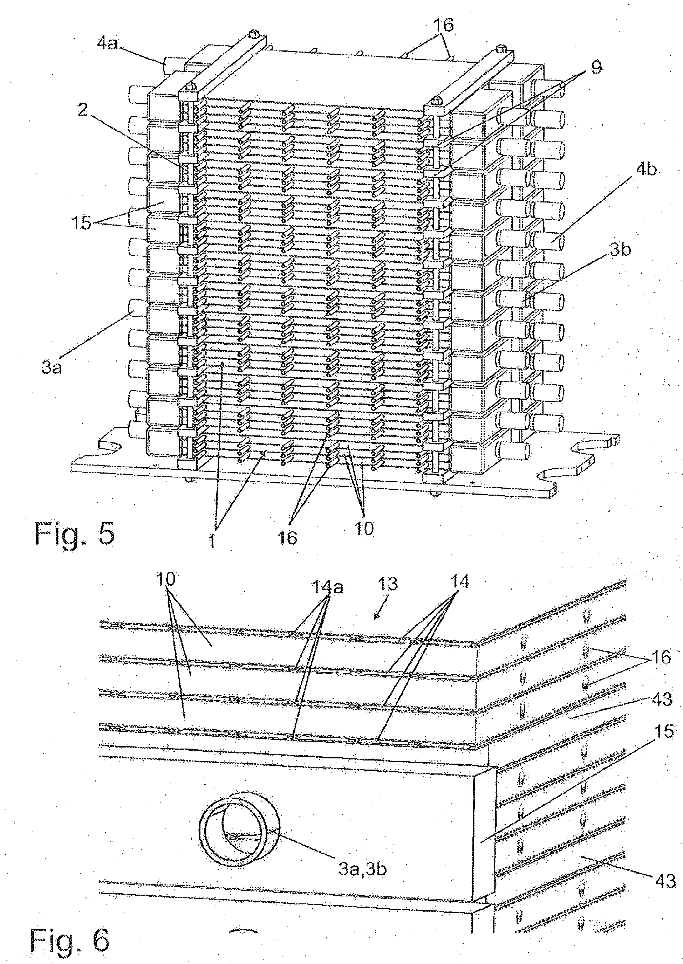

Die benachbarten Hohlelemente 1 sind zueinander beabstandet gehalten, was vorliegend durch geeignete Abstandsstücke 9 zwischen den Hohlelementen erreicht wird. Zwischen den Hohlelementen 1 verbleibt somit jeweils ein Luftspalt, so dass sie thermisch gut voneinander isoliert sind. Zur weiteren Verbesserung der thermischen Isolation können Dämmplatten 43 (siehe Fig. 6), z. B. aus geschäumten Polymer oder faserigen Dämmstoffen eingelegt sein.

Die einzelnen.Anschlüsse 3a, 3b, 4a, 4b der Hohlelemente 1 sind mit korrespondierenden Anschlüssen 6d, 7d der Rotationsventile 6, 7 verbünden, welche sich jeweils in einer Reihe ausgerichtet radial von den Wänden eines Abführbereichs der wesentlichen zylindrisch geformten Rotationsventile erstrecken. Zum Ausgleich von thermisch bedingten Dehnungen der Wärmepumpe sind die Anschlüsse 7d, 6d der Rotationsventile 6, 7 mit den Anschlüssen 3a, 3b, 4a, 4b des Stapels aus Hohlelementen 1 über elastische Verbindungsstücke, z. B. Schlauchstücke oder Wellbälge, verbunden.

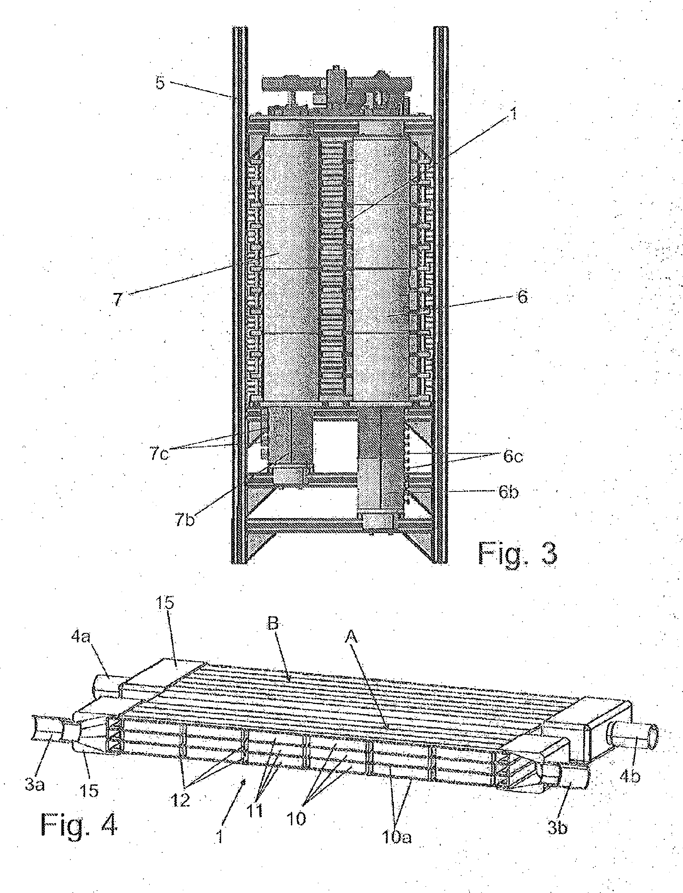

Wie insbesondere aus Fig. 4 bis Fig. 6 hervorgeht, sind die einzelnen Hohlelemente 1 zur Optimierung des Wärmeaustauschs mit dem Fluid jeweils als Stapel von Unterelementen 10 ausgebildet, welche jeweils von dem Fluid umströmt werden. Jedes der Unterelemente 10 ist als plattenförmiges ebenes Element ausgebildet, in dem mehrere Adsorberelemente 11 in Strömungsrichtung des Fluids nebeneinander angeordnet sind und über bezüglich der Fluidströmungsrichtung senkrechte Stege 12 stoffdicht voneinander getrennt sind. Die Adsorberelemente 11 sind vorwiegend im Bereich der ersten Zone A angeordnet (siehe Darstellung nach Fig. 4), wobei in der Zone B ebenfalls durch die Stege 12 voneinander separierte Verdampfungs/Kondensationsstrukturen vorgesehen sind. Diese nicht dargestellten Strukturen können z. B. aus Kapillarstrukturen bestehen, die eine ausreichende Menge eines Arbeitsmittels in flüssiger Phase festhalten können. Die Adsorberelemente 11 bestehen im vorliegenden Ausführungsbeispiel aus Aktivkohle, wobei das Arbeitsmittel Methanol ist. Je nach Temperaturbereich und Einsatzziel der Wärmepumpe sind beliebige Kombinationen von Adsorptionsmaterial, Arbeitsmittel und Ausbildung von Verdampferbereich denkbar. Grundsätzlich ist eine erfindungsgemäße Wärmepumpe auch nicht auf das Adsorptions/Desorptionsprinzip begrenzt, sondern es können beliebige geeignete thermodynamisch aktive Hohlelemente 1 vorgesehen sein, zum Beispiel chemisorptiv wirkende Hohlelemente.

Jedes der Unterelemente 10 ist als mittels Deckplatten 10a stoffdicht geschlossenes Plattenelement ausgeformt. Diese geschlossenen Elemente 10 werden über kleine Abstandsstücke 14a (siehe Fig. 6) beabstandet zueinander gestapelt und gegenüber äußeren Abschlussplatten 13 der Hohlelemente beabstandet gehalten. In jedem der Hohlelemente 1, die aus vorliegend jeweils drei Unterelementen 10 gestapelt sind, befinden sich somit vier ebene Durchströmungswege 14 für das Fluid. Diese Durchströmungswege 14 sind durch die sich in Fluidströmungsrichtung durchgängig erstreckenden Abstandsstücke 14a weiter unterteilt. Bei den Abstandsstücken 14a kann es sich zur weiteren Reduzierung der Bauteile auch um Einprägungen in den Deckplatten 10a und/oder Abschlussplatten 13 handeln.

Weiterhin können die Durchtrömungswege 14 mit nicht dargestellten, oberflächenvergrößernden Strukturen wie zum Beispiel Rippen ausgestattet sein.

In den endseitigen Anschlussbereichen der Hohlelemente 1 für das Fluid sind Anschlussstücke 15 vorgesehen, die nach Art von Sammlerkästen oder Hutzen das Fluid auf die mehreren Durchströmungsbereiche 14 zwischen den Unterelementen 10 verteilen.

Aus jeder der hermetisch durch die Deckplatten 10a und die Stege 12 abgetrennten Kammern der Unterelemente 10 ragt seitlich jeweils ein Befüllröhrchen 16 heraus (siehe Fig. 5), über das die einzelnen Kammern evakuiert und mit Arbeitsmittel befüllt werden können. Nach dem Befüllen werden die Füllröhrchen 16 z. B. durch Quetschung dauerhaft verschlossen. Um den Befüllvorgang zu vereinfachen ist auf jeder der gegenüberliegenden Stirnseiten einer jeweils hermetisch abgetrennten Kammer ein Befüllröhrchen 16 angeordnet, so dass die Kammern in ihrer Längsrichtung, d. h. senkrecht zu der Strömungsrichtung des Fluids, von dem Arbeitsmittel durchströmt werden können. So kann im Zuge des Befüllvorgangs auf einer Seite ein Vakuum angelegt werden und auf der gegenüberliegenden Seite über das entsprechende Befüllröhrchen das Arbeitsmittel zugeführt werden.

Insgesamt ist durch diesen modularen Aufbau der Wärmepumpe aus separierten Hohlelementen 1 mit Unterelementen 10 nicht nur der thermische Wirkungsgrad durch thermische Isolierung der separaten Hohlelemente verbessert, sondern auch eine wartungsfreundliche Konstruktion geschaffen, bei der nur ein defektes Hohlelement und nicht der gesamte Stapel von Hohlelementen ausgetauscht werden muss.
Die in den Ansichten der Wärmepumpe nach Fig. 1 bis Fig. 3 schematisch gezeigten Rotationsventile 6, 7 entsprechen ihrer Bauart nach dahingehend dem Stand der Technik, dass die wechselnde Verschaltung der verschiedenen Strömungskanäle über radial gerichtete Trennwände in Verbindung mit daran anschließenden Ringkammer in doppelwandigen Zylindern erfolgt. Die Trennwände bilden in Verbindung mit den Öffnungen der Zylinderwände einen Schaltbereich des Rotationsventils aus.

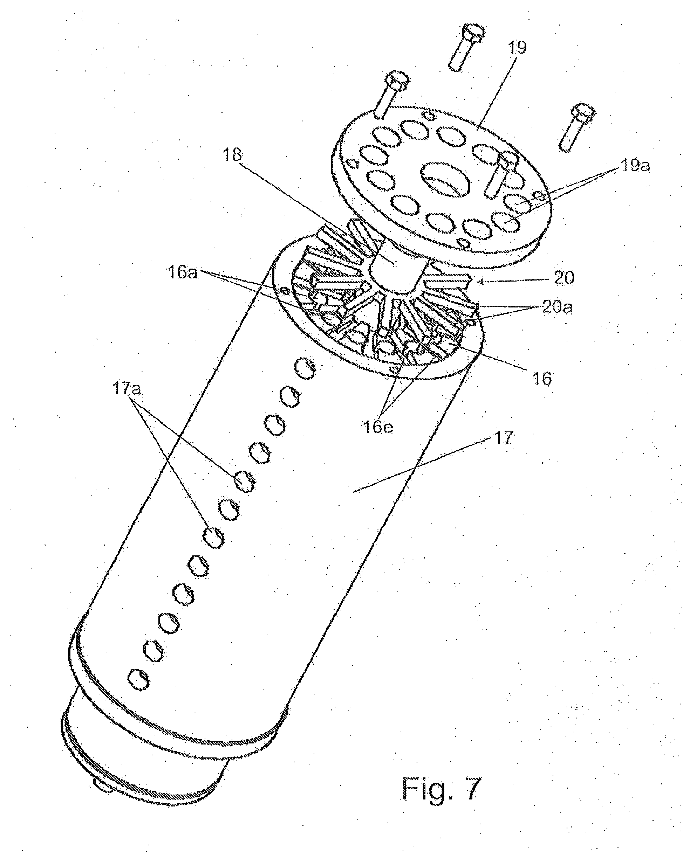

In Fig. 7 ist eine erfindungsgemäße Weiterentwicklung eines solchen Rotationsventils dargestellt, das in besonders bevorzugter Ausführung mit der zuvor beschriebenen Wärmepumpe unmittelbar kombiniert werden kann und das Vorteile unter anderem hinsichtlich einer geringeren Baugröße, einer einfacheren Herstellbarkeit und einer besseren Abdichtung der separaten Kanäle aufweist.

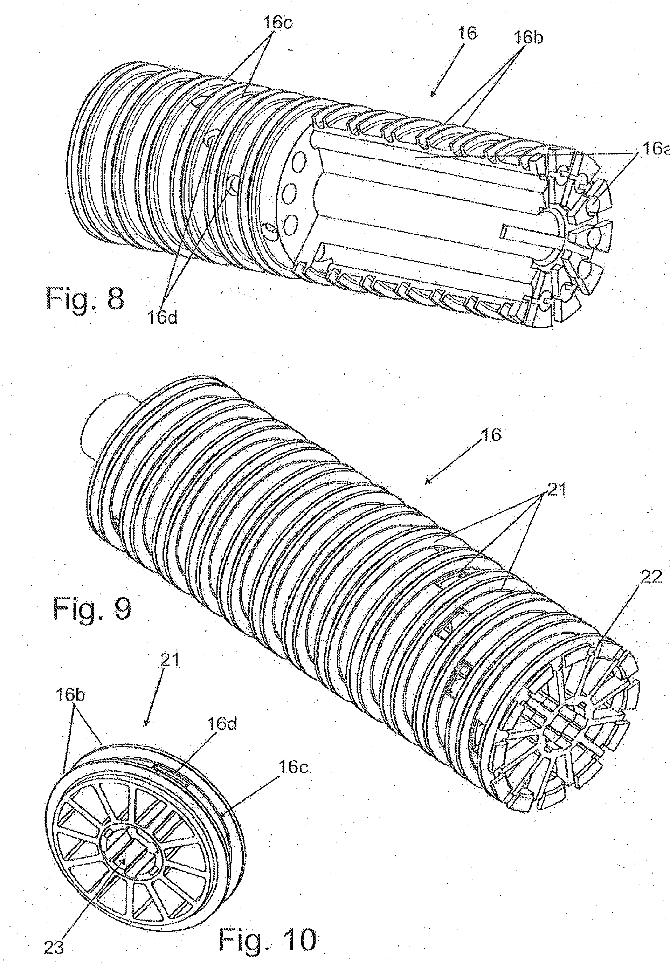

Dabei ist ein drehbar angetriebenes Schaltglied 16 in einem nur einwandigen Hohlzylinder 17 angeordnet, welcher die in einer geraden Reihe angeordneten äquidistanten Anschlussöffnungen 17a zur Verbindung mit den Anschlüssen 3a, 3b des Stapels von Hohlelementen 1 aufweist. Das Schaltglied 16 ist in Fig. 8 separat dargestellt. Es handelt sich um ein als im Wesentlichen zylindrischer Längskörper ausgebildetes Element, das um eine zentrale Welle oder Achse 18 drehbar ist. Das Schaltglied 16 hat in seiner Umfangsrichtung eine Anzahl von axialen, parallelen Bohrungen 16a, deren Anzahl vorliegend zwölf ist und der Anzahl der Hohlelemente bzw. separater, wechselnd verschalteter Strömungskanäle entspricht. Über die Länge des als zylindrischer Längskörper ausgeformten Schaltglieds 16 sind eine Reihe von vorliegend ringartigen umlaufenden, radialen Vorsprüngen 16b vorgesehen. Die Vorsprünge 16b sind paarig ausgeführt, so dass zwischen einem Paar von Vorsprüngen eine nicht dargestellte Ringdichtung formschlüssig gehalten ist. Hierdurch werden insgesamt Dichtglieder zur Ausbildung von äquidistanten Ringkammern 16c ausgeformt, die über die Dichtringe fluiddicht voneinander getrennt sind. Jede der Ringkammern 16c hat eine bezüglich der Fluidströmung radial gerichtete Bohrung 16d, die in jeweils genau einen der axialen Kanäle 16a mündet. Die radialen Bohrungen 16d sind entsprechend in Umfangsrichtung versetzt zueinander angeordnet, so dass sie eine umlaufende Spirale mit der Steigung 1 bilden. Insgesamt ist somit jede der stirnseitig axial mündenden Kanalbohrungen 16a mit genau einer Ringkammer 16c radial verbunden. Jede der Ringkammern 16c fluchtet dabei fluiddicht gegen die anderen Ringkammern abgedichtet mit einer der Verbindungsöffnungen 17a zum Stapel von Hohlelementen 1.

Wie Fig. 7 zeigt, überstreichen die stirnseitigen axialen Öffnungen der Kanäle 16a korrespondierende axial gerichtete Öffnungsbohrungen 19a einer Steuerscheibe 19, die stirnseitig abschließend auf dem Rotationsventil aufgebracht ist und ortsfest und dichtend mit dem Außenzylinder 17 verbunden ist.

Im Zuge einer Drehung des Schaltglieds 16 fluchten somit die einzelnen axialen Kanäle 16a nach Art mitbewegter axialer Öffnungen abwechselnd mit den verschiedenen ortsfesten, axial gerichteten Zuführöffnungen 19a der Steuerscheibe 19. Die Steuerscheibe 19 bildet bei dieser Ausführungsform einen Zuführbereich im Sinne der Erfindung und ist zugleich ein Teil des Schaltbereichs des Rotationsventils.

Um einen ungewünschten Fluidaustausch benachbarter Kanäle im Bereich dieses schaltenden Übergangs der Öffnungen 19a auf die Öffnungen 16a zu verringern oder auch ganz zu vermeiden ist ein sternförmiges Dichtungselement 20 zwischen der Steuerscheibe 19 und der Stirnseite des Schaltglieds 16 eingesetzt. Die sternförmigen Finger 20a des Dichtungselements 20 greifen dabei in radiale Nuten 16a der Stirnseite des Schaltglieds 16 ein.

Ein System aus Verbindungsschläuchen (nicht dargestellt) ist mit den Zuführöffnungen 19a der Steuerscheibe 19 verbunden und führt andersseitig entsprechend dem grundsätzlichen Konzept der Wärmepumpe zu anderen Öffnungen 19a oder auch einem äußeren Wärmetauscher. Zur Anbindung an äußere Wärmetauscher oder Wärmequellen wird allgemein auf den Stand der Technik WO 2007/068481 A1 verwiesen.

Fig. 9 zeigt eine gegenüber Fig. 8 bezüglich der Funktion identische Abwandlung des Schaltglieds 16. Das Schaltglied 16 ist dabei als Stapel aus Längskörperelementen 21 (siehe Fig. 10) sowie einem abweichend ausgeformten Endstück 22 ausgebildet. Zumindest einige der Längskörperelemente 21 sind dabei jeweils baugleich und um einen Bruchteilwinkel gemäß der Anzahl der Kanäle zueinander verdreht aufgebaut. Zur weiteren Vereinfachung eines solchen Aufbaus ist eine formschlüssige Aufnahme 23 in den Längskörperelementen 21 zur formschlüssigen Verbindung mit einer zentralen Antriebswelle vorgesehen, wobei die Aufnahmen 23 einer der Anzahl der Kanäle entsprechende Symmetrie aufweist. Vorliegend hat die Aufnahme 23 nur eine sechsfach geteilte Rotationssymmetrie, so dass zwei bezüglich der Positionierung der radialen Öffnung 16d relativ zu der Aufnahme 23 unterschiedliche Längskörperelemente 21 zum Aufbau des gesamten Stapels aus zwölf Längskörperelementen abwechselnd verwendet werden.

Nicht dargestellt ist eine Variante, bei der Welle und Aufnahme eine 12-fach geteilte Symmetrie aufweisen, wobei dann nur eine Art von Längselementen benötigt wird.

Vorliegend sind die Rotationsventile 6, 7 aus einem ausreichend temperaturbeständigen Kunststoff hergestellt, wobei der Stapel aus Hohlelementen 1 hinsichtlich seiner Wände und Anschlüsse im Wesentlichen aus Metallblechen aufgebaut ist. Als Kunststoff zum Aufbau der Rotationsventile 6, 7 empfiehlt sich insbesondere die Verwendung nachvernetzter Thermoplaste.

Durch die vorstehend beschriebene Konstruktion des Schaltglieds 16 wird ein Wechseln der Verschaltung der Strömungskanäle durch Überdeckung bezüglich der Fluidströmung axial gerichteter Öffnungen erreicht, wodurch die Baulänge beträchtlich verkürzt wird und Anzahl und Formgebung der Bauteile verringert bzw. vereinfacht werden. Insbesondere kann auf einen im Bereich der Anschlüsse mit dem Stapel von Hohlelementen 1 doppelwandigen Zylinder mit zwischen den ortsfesten Zylinderwänden ausgebildeten Ringkammern wie im Stand der Technik verzichtet werden.

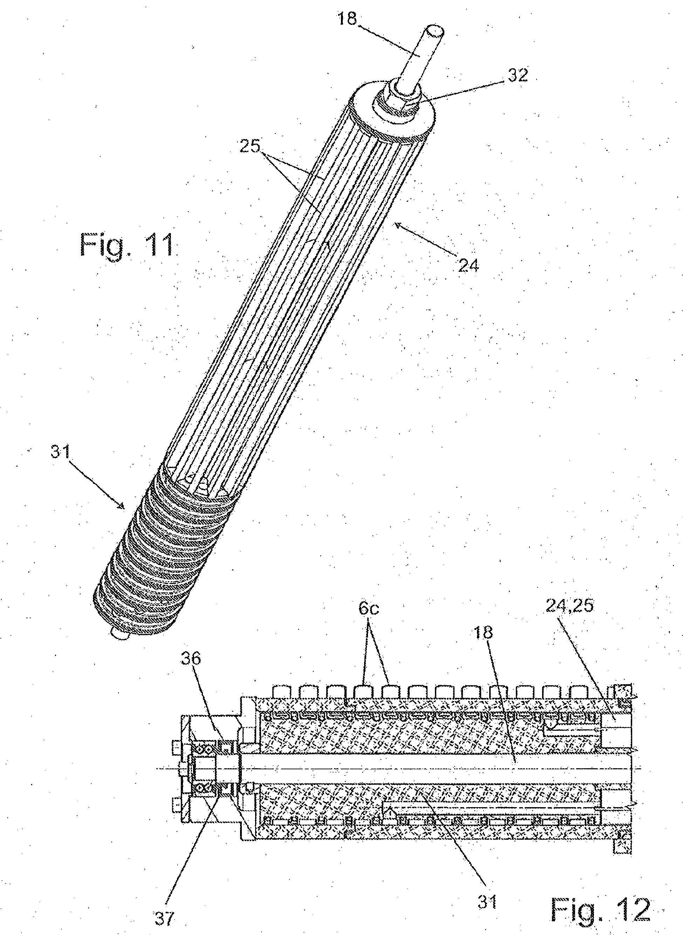

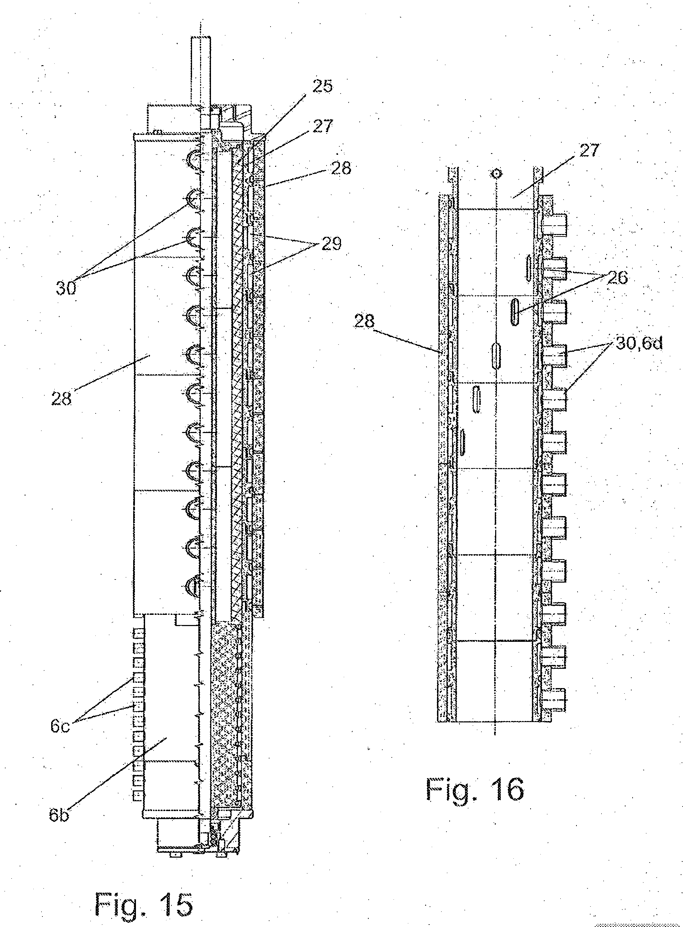

Fig. 11 bis Fig. 18 zeigen Ausführungen und Abwandluhgen eines Rotationsventils mit einem Schaltglied 24 mit radialen Trennwänden Dabei werden die durch die sich radial erstreckenden Trennwände 25 separierten Kanäle über einen Innenzylinder mit in Umfangsrichtung versetzten Bohrungen 26 (siehe Fig. 16) bewegt, so dass die Kanäle im Zuge der Bewegung der Trennwände 25 jeweils mit verschiedenen Öffnungen 26 nacheinander überdecken. Dabei mündet jede der Bohrungen 26 in einer zwischen dem ortsfesten Innenzylinder 27 und einem ortsfesten Außenzylinder 28 ausgebildeten Ringkammer 29. In dem Außenzylinder 28 sind dabei in einer geraden Reihe äquidistant angeordnete Anschlüsse 30 zur Verbindung mit dem Stapel von Hohlelementen 1 vorgesehen. Der Schaltvorgang zur wechselnden Verschaltung der Strömungskanäle erfolgt bei einer solchen Ausführungsform durch das Überstreichen der Trennwände 25 über die bezüglich der Fluidströmung radial gerichteten Öffnungen 26.

Für eine solche Ausführungsform eines Rotationsventils wird nachfolgend eine Reihe von Verbesserungen gegenüber dem Stand der Technik erläutert.

Fig. 11 zeigt dabei eine Anordnung des Schaltglieds 24 eines solchen Rotationsventils zusammen mit einem Zuführbereich 31, der in seiner Bauart ähnlich dem Schaltglied 16 aus Fig. 8 ausgeformt ist, hier aber nicht die Funktion eines Schaltglieds übernimmt, da in dem Zuführbereich kein Wechsel der Zuordnungen der Strömungskanäle erfolgt. Der Zuführbereich 31 und das Schaltglied 24 sind als drehfest verbundene, separate Bauteile über eine sie gemeinsam durchgreifende Welle 18 nach Art eines Zugankers mittels einer Sicherungsschraube 32 miteinander verbunden.

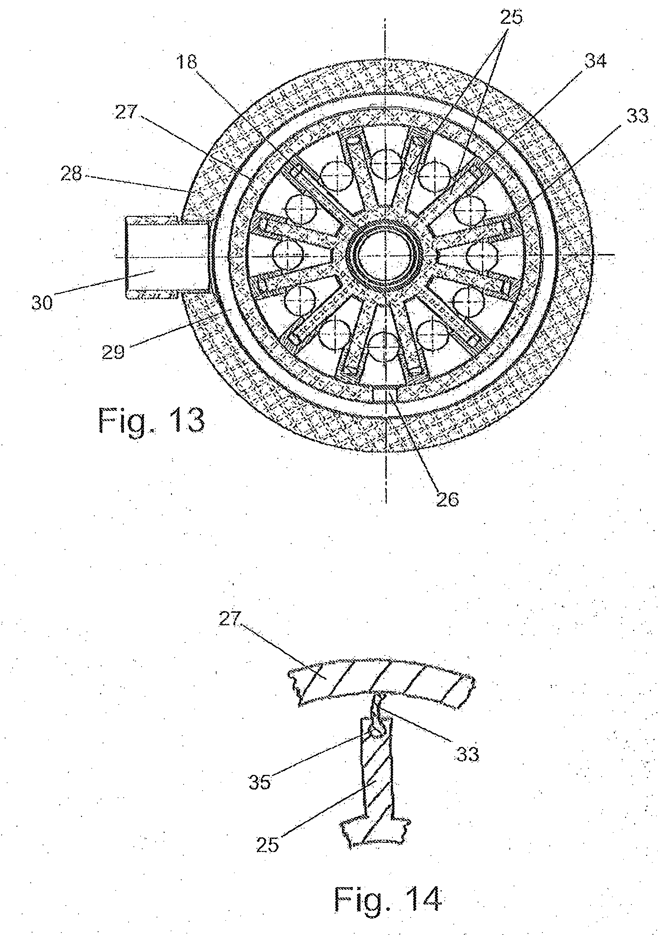

Die sich sternförmig radial erstreckenden Trennwände 25 haben in ihren radialen Endbereichen vorteilhaft federelastisch angeordnete Dichtmittel 33 nach Art von sich axial erstreckenden Dichtleisten. Fig. 13 zeigt eine beispielhafte Ausführung, bei der die Dichtleisten 33 einen U-förmigen Querschnitt haben, wobei ein zusätzliches federelastisches Element 34 zwischen der Stirnseite der Trennwand 25 und dem Dichtmittel 33 eingelegt ist. Hierdurch wird eine besonders gute Abdichtung der einzelnen axialen Kanäle gegeneinander erreicht.

Eine Abwandlung einer solchen Dichtleiste an den radialen Endbereichen der Trennwände 25 ist in Fig. 14 dargestellt. Dabei ist die Dichtung 33 nach Art einer über die Innenwand streichende Dichtlippe ausgebildet, die über eine kederartige Verdickung 35 in eine korrespondierende stirnseitige Nut der Trennwand 25 formschlüssig eingesetzt ist.

Eine weitere vorteilhafte Weiterentwicklung ist in Fig. 12 dargestellt, bei der die zentrale Welle 18 des Schaltglieds 24 an zumindest einem Ende des Rotationsventils in einer Lagerbuchse 36 gelagert ist, die zudem eine Rotationsdichtung 37 aufweist. Die Rotationsdichtung 37 dichtet eventuelle Leckagen von Fluid gegenüber dem Außenraum zusätzlich ab.

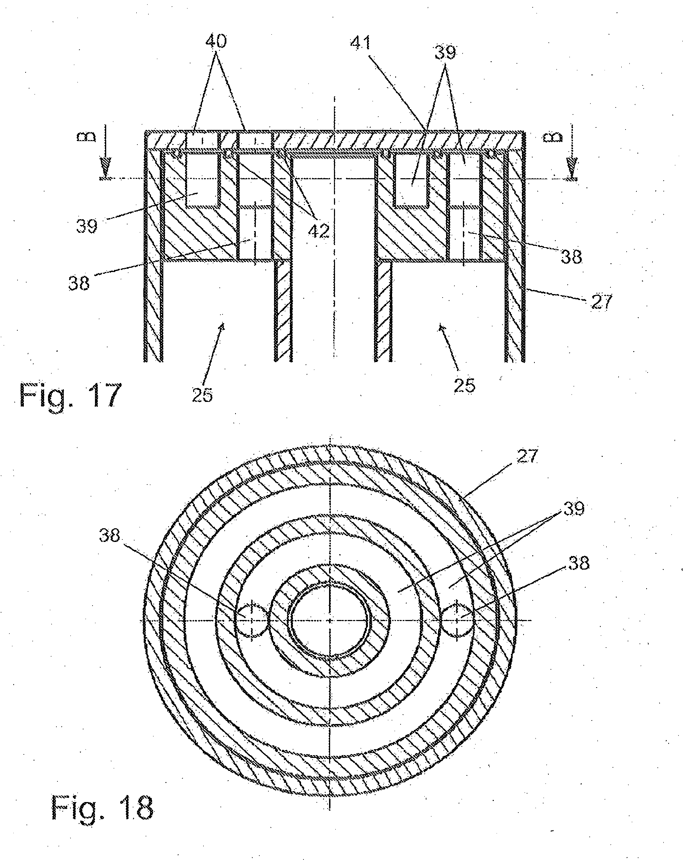

Ein weiteres Ausführungsbeispiel eines erfindungsgemäßen Rotationsventils ist in den Figuren Fig. 17 und Fig. 18 dargestellt. Auch bei diesem Ventil erfolgt die Verschaltung der Strömungswege mittels radial gerichteter Trennwände 25 und radial gerichteter Öffnungen in der Wandung eines Innenzylinders 27, die in Ringkammern eines nicht dargestellten Außenzylinders münden.

Im Unterschied zu der Ausführung z. B. nach Fig. 11 ist in der Ausführung nach Fig. 17 und Fig. 18 der Zuführbereich der Fluidströme zu den von den Trennwänden 25 unterteilten axialen Kammern auf einfache Weise und kleinbauend ausgelegt. Dies wird erreicht, indem jede der axial längsgerichteten, von den Trennwänden 25 separierten Kammern des Schaltglieds über jeweils eine Bohrung 38 mit jeweils einer unterschiedlichen konzentrischen Ringnuten 39 verbunden ist, wobei jede der Ringnuten 39 sich mit den anderen Ringnuten 39 in einer Ebene befindet, jedoch einen unterschiedlichen Durchmesser aufweist. Im vorliegenden Ausführungsbeispiel nach Fig. 17 und Fig. 18 sind nur zwei Ringnuten 39 zu entsprechenden wechselnden Schaltung von nur zwei Strömungswegen dargestellt. Es können auch mehr als zwei konzentrische Ringnuten vorgesehen sein, wobei im Allgemeinen eine besonders hohe Anzahl von Strömungswegen, wie z. B. zwölf Strömungswege wie in den vorstehend beschriebenen Ausführungsbeispielen konstruktiv zunehmend aufwendiger werden. Ein solches Rotationsventil ist jedoch sehr gut geeignet, z. B. für die Verschaltung des Verdampfer/Kondensatorbereichs einer vorstehend erläuterten Wärmepumpe eingesetzt zu werden, da dort zumeist nur wenige, z. B. zwei oder vier separate Strömungswege verschaltet werden.

Die Verbindung der Ringnuten 39 des Schaltglieds mit äußeren Zuführungen der Fluidströme erfolgt über Bohrungen 40 in einer mit dem Zylinder ortsfest verbundenen Zuführplatte 41. Jede der Bohrungen 40 mündet dabei in genau eine der Ringnuten 39, so dass gemäß der Darstellung 17 jede der Öffnungen 40 der Zuführplatte 41 unabhängig von der Drehstellung des Schaltglieds mit genau einer der von den axialen Trennwänden 25 gebildeten axialen Kammern des Schaltglieds verbunden ist. Zur Sicherstellung der fluiddichten Trennung der Ringnuten sind jeweils O-Ring-Dichtungen 42 zwischen der Zuführplatte 41 und den Wänden der Ringnuten 39 vorgesehen.

In den Zeichnungen Fig. 17 und Fig. 18 ist aus Gründen der Übersichtlichkeit der Außenzylinder mit seinen den Innenzylinder 27 umgebenden Ringkammern nicht dargestellt.

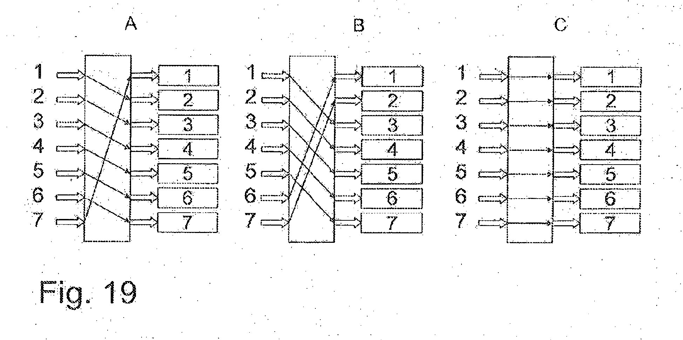

Fig. 19 zeigt schematisch die Schaltfunktion eines Rotationsventils mit sieben wechselnd geschalteten Strömungswegen bzw. Fluidströmen. Es sind drei Schaltstellungen A, B, C dargestellt, wobei die Stellung C nach einem weiteren Schritt wieder in die Stellung A überführt wird. Eingangsseitig findet sich jeweils die Nummerierung der Fluidströme 1-7 und ausgangsseitig die Nummerierung der Hohlelemente 1-7. Nach sieben Wechseln der Zuordnung bzw. einer vollen Umdrehung des Rotationsventils wird die ursprüngliche Verschaltung wieder erreicht.

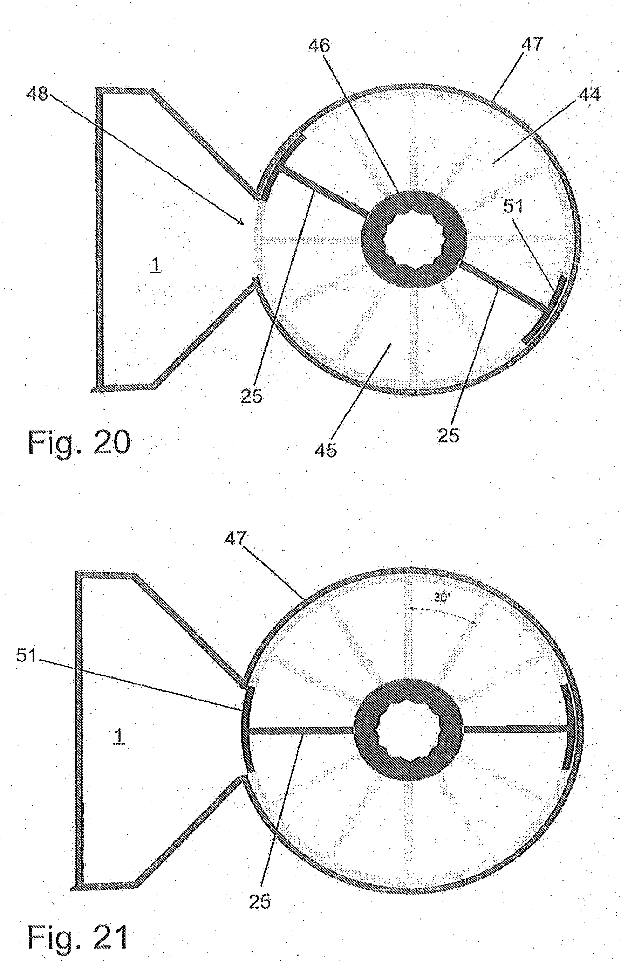

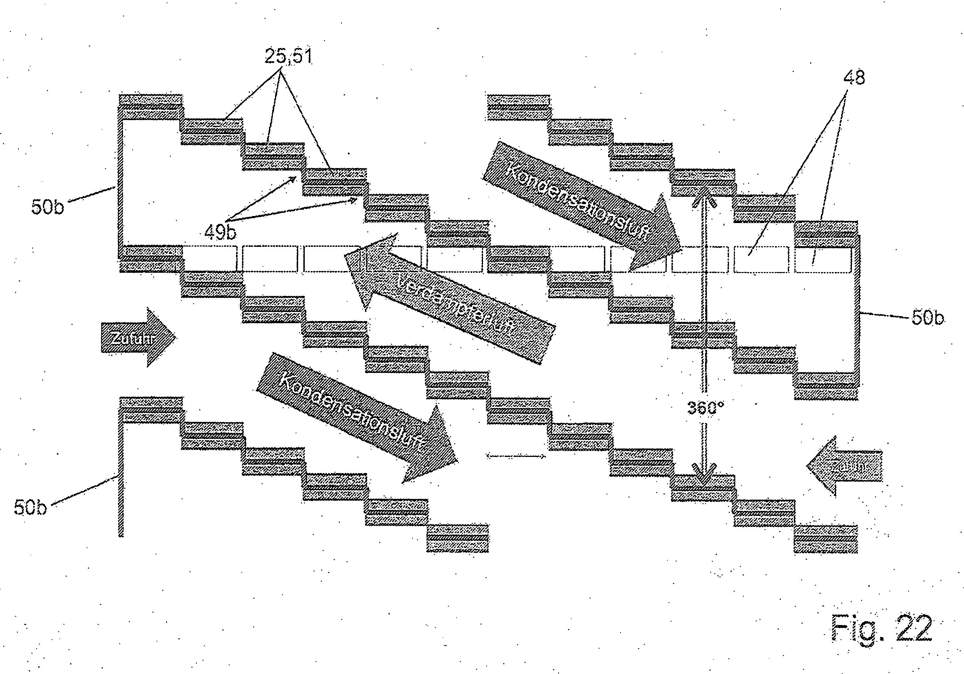

Das in Fig. 20 bis Fig. 24 gezeigte, erfindungsgemäße Ausführungsbeispiel eines Rotationsventils 7 zur Kombination mit einer erfindungsgemäßen Wärmepumpe weist nur zwei Kammern bzw. Strömungskanäle 44, 45 auf und ist besonders geeignet, mit Luft als zweites Fluid zum Austausch von Wärme mit den zweiten Zonen B der Hohlelemente 1 kombiniert zu werden. Das Rotationsventil 7 dieses Ausführungsbeispiels hat einen nur einwandigen Außenzylinder 47, der in einer geraden Reihe angeordnete radiale Öffnungen 48 zum Anschluss an die Hohlelemente 1 aufweist. Ein in dem Zylinder 47 aufgenommenes drehbares Schaltglied 24 umfasst eine Nabe oder Welle 46, von der sich radial zwei Trennwände 25 bis zur Zylinderwand erstrecken. Im Unterschied zu dem Ausführungsbeispiel nach Fig. 11 sind die Trennwände 25 weder in axialer Richtung gerade, noch, wie aus aus dem Stand er Technik WO 2007/068481 A1 bekannt, kontinuierlich gewendelt ausgeführt. Stattdessen sind die Trennwände 25 stufig gewendelt, wie sich insbesondere aus der abgerollten Darstellungen nach Fig. 22 ergibt.

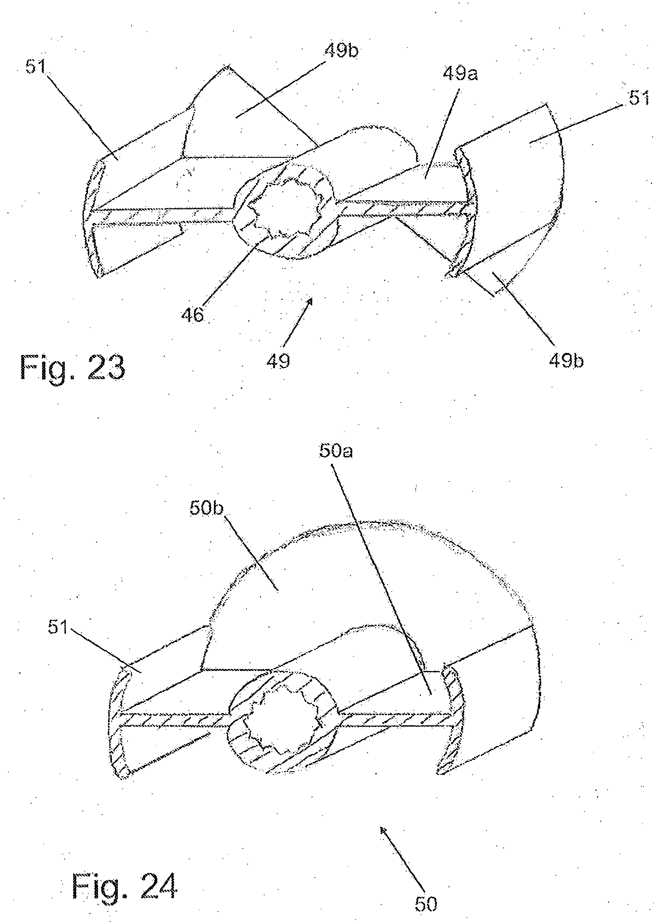

Die stufige Wendelung der Trennwände 25 des Schaltglieds 24 ermöglicht einen einfachen Aufbau aus mehreren axial hintereinander angeordneten Schaltgliedteilen 49, 50. Fig. 23 zeigt dabei ein Schaltgliedteil 49, wie es im mittleren Bereich als Wiederholung von Gleichteilen vorgesehen ist, die jeweils um eine bestimmte Gradzahl versetzt zueinander angeordnet sind. Die Schaltgliedteile 49 haben ebene, sich parallel zur Drehachse radial erstreckende Trennwandabschnitte 49a sowie sich senkrecht zur Drehachse erstreckende, an die Trenwandsegmente 49a anschließende Abdecksektoren 49b von im vorliegenden Beispiel 30° Öffnungswinkel, mittels derer insgesamt die gestuft gewendelten Kammern bzw. Strömungskanäle 44, 45 des Schaltglieds 24 ausgebildet werden.

Die endseitig angeordneten, Abschlussstücke ausbildenden Schaltgliedteile 50 haben einen einzelnen Abdecksektor 50b mit einen Öffnungswinkel von 180°, wobei diese 180°-Abdecksektoren an den gegenüberliegenden Enden des Schaltglieds 24 invers zueinander angeordnet sind. Hierdurch sind auf einfache Weise eine äußere Zuführung und eine äußere Abführung zu den Kammern 44, 45 ausgebildet, da das Fluid (vorliegend Luft) lediglich an der einen Stirnseite des Außenzylinders 47 zugeführt und an der gegenüberligenden Stirnseite abgeführt werden kann (siehe auch die abgewickelte Darstellung nach Fig. 22). Je nach momentanem Betriebszustand der Hohlelemente der zweiten Zone B kann die zugeführte Luft dabei als Verdampferluft oder als Kondensationsluft bezeichnet werden.

Ein weiteres bevorzugtes, für das Grundprinzip aber nicht notwendiges Detail des Rotationsventils besteht in einer radial endseitig an den Trennwandabschnitten 25, 49 vorgesehenen, der Krümmung des Zylinders 47 folgenden Abdeckfahne 51. Der Öffnungswinkel der Abdeckfahne 51 ist etwa so groß wie der Öffnungswinkel der Öffnungen 48 der Zylinderwand, so dass in einer Stellung (siehe Darstellung in Fig. 21) jeweils einzelne oder bei entsprechender Auslegung auch mehrere der Hohlelemente 1 bezüglich der zweiten Zone B verschlossen sind. Dies stellt im Betrieb einen adiabatischen Zwischenschritt der Verschaltungen der Strömungswege dar, wodurch die Effektivität der Wärmepumpe weiter verbessert werden kann.

Im vorliegenden Beispiel liegen zwölf Hohlelemente 1 vor, so dass insgesamt zwölf um jeweils 30° verdreht zueinander ausgerichtete Schaltgliedteile 49, 50 zu einem Schaltglied 24 kombiniert sind. Es sind allerdings auch abweichende Stufungen bei gegebener Zahl von Hohlelementen denkbar, ohne dass die Funktion des Rotationsventils wesentlich beeinflusst wird.

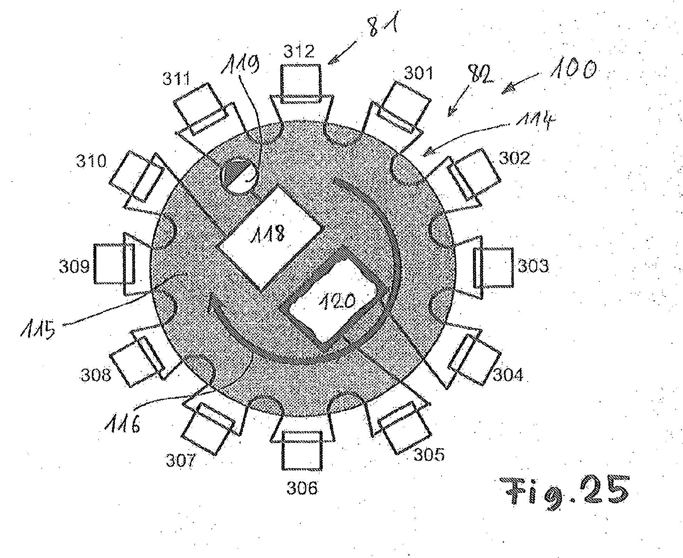

In Fig. 25 ist die Schaltaufgabe eines Rotationsventils 100 gemäß einem weiteren Ausführungsbeispiel als 2-D-Schema dargestellt. Das Rotationsventil 100 umfasst eine Mehrzahl von Zuführungen 101 bis 112 sowie Abführungen 201 bis 212, die den Zuführungen 101 bis 112 über Verbindungsleitungen 126 bzw. 128 und 129 einzeln zuordenbar sind. Die Zu- und Abführungen sind z. B. mit thermisch aktiven Modulen 301 bis 312 verbunden. Das Rotationsventil 100 umfasst ein Schaltglied 114, das wiederum einen Rotationskörper 115 umfasst, der, wie durch einen Pfeil 116 angedeutet ist, drehbar ist. In dem Rotationskörper 115 ist ein erster Wärmetauscher in Form eines Kühlers 118 dargestellt, dem eine Pumpe 119 nachgeschaltet ist. Ein zweiter Wärmetauscher ist als Heizer 120 ausgeführt.

Das in Fig. 25 dargestellte Rotationsventil 100 dient dazu, die Durchströmung von zwölf thermisch aktiven Modulen, wie sie vorab anhand der Ausführungsbeispiele der Fig. 1 bis 24 beschrieben sind, mit einem Wärmeträgerfluid zu steuern. Mit dem in Fig. 25 dargestellten Rotationsventil 100 können die zwölf thermisch aktiven Module 301 bis 312 seriell von einem Wärmeträgerfluid durchströmt werden. Zwischen je zwei der Module ist die Wärmequelle, insbesondere der Heizer 120, und die Wärmesenke, insbesondere der Rückkühler 118, geschaltet. Das Rotationsventil 100 hat die Aufgabe, den Ort der Zwischenschaltung des Heizers 120 und des Rückkühlers 118 schrittweise zu verschieben, ohne dass diese mitrotiert werden müssen, wie es bei direkter Umsetzung der schematischen Schaltung erforderlich wäre. Abweichend von der Darstellung der Fig. 25 sind der Kühler 118, die Pumpe 119 und der Heizer 120 daher bei den nachfolgenden Figuren einer beispielhaften konstruktiven Umsetzung ortsfest außerhalb des Rotationsventits 100 angeordnet.

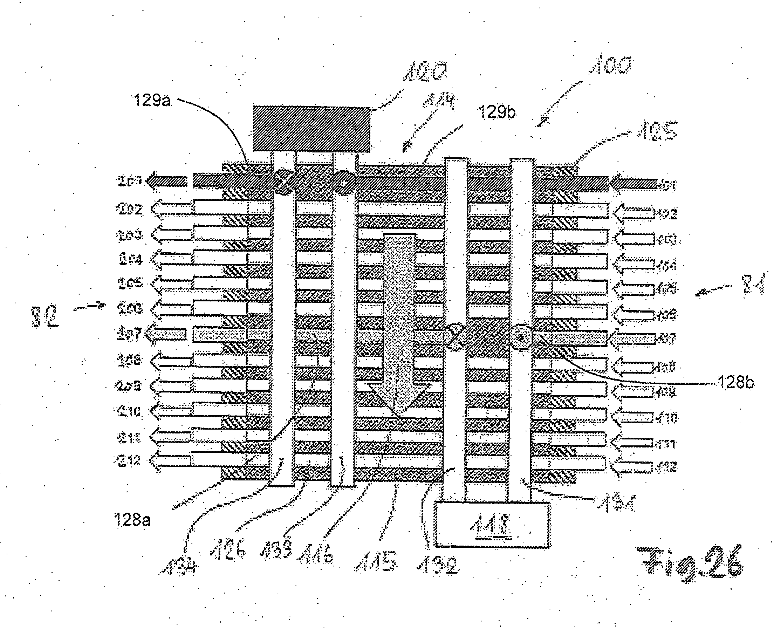

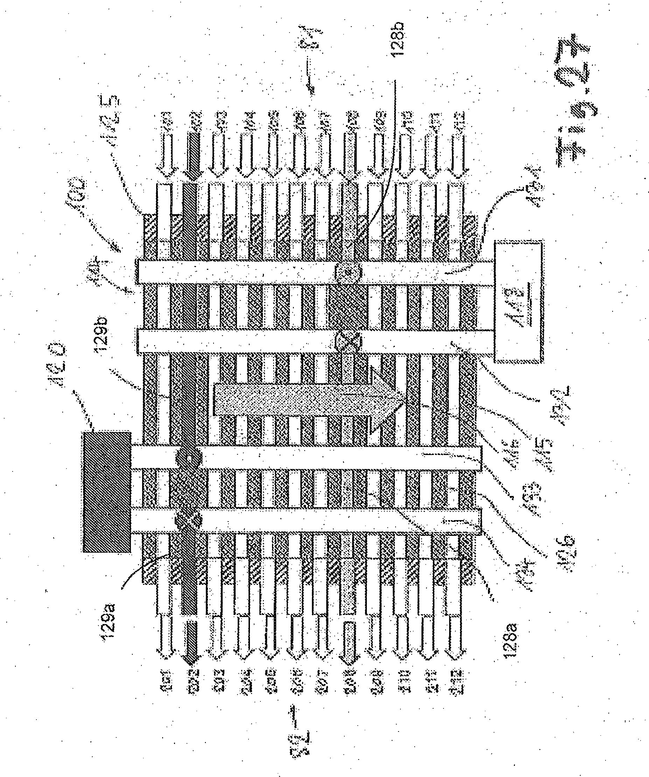

In den Fig. 26 und 27 ist das Rotationsventil 100 aus Fig. 25 zunächst in einer schematisierten Abwicklung dargestellt. Das Rotationsventil 100 umfasst zwölf Zuführungen 101 bis 112, die auch als Eingänge bezeichnet werden und zu einem Zuführbereich 81 zusammengefasst sind. Analog umfasst das Rotationsventil 100 zwölf Abführungen 201 bis 212, die auch als Ausgänge bezeichnet werden und zu einem Abführbereich 82 zusammengefasst sind. Die Zuführungen 101 bis 112 können mit Hilfe des Schaltglieds 114, das den Rotationskörper 115 umfasst, auf unterschiedliche Art und Weise mit den Abführungen 201 bis 212 verbunden werden, wenn sich der Rotationskörper 115 in Richtung des Pfeils 116 dreht. In den Fig. 26 und 27 sind der Kühler 118 und der Heizer 120 außerhalb eines Gehäuses 125 angeordnet.

Jeder Zuführung 101 bis 112 und jeder Abführung 201 bis 212 ist eine Öffnung in einer Stirnseite des Gehäuses 125 zugeordnet, das im Wesentlichen die Gestalt eines hohlen Kreiszylinders aufweist. Die Zuführungen und Abführungen münden in den Stirnseiten des Gehäuses 125. Jeder Öffnung in dem Gehäuse 125 ist eine Öffnung in dem Rotationskörper 115 zuordenbar. Durch diese Zuordnungen kann jede der Zuführungen 101 bis 112 definiert mit der zugehörigen Abführung 201 bis 212 verbunden werden. Bei dem in Fig. 26 dargestellten Ausführungsbeispiel sind die Zuführungen 102 bis 106 und 108 bis 112 über jeweils einen Durchgangskanal 126 mit den zugehörigen Abführungen 202 bis 206 und 208 bis 212 verbunden. Die Durchgangskanäle 126 erstrecken sich geradlinig durch den Rotationskörper 115 hindurch.

Die Zuführungen 101 und 107 sind über unterbrochene Verbindungskanäle 128, 129 jeweils mit der zugehörigen Abführung 201, 207 verbunden. Die Verbindungskanäle 128, 129 sind mittels Trennwänden oder dergleichen derart in Teilkanäle 128a, 128b bzw. 129a,129b unterteilt, dass sie eine Strömungsumleitung über den Kühler 118 bzw. den Heizer 120 erzwingen. Zu diesem Zweck sind innerhalb des Gehäuses 125 vier Ringkammern 131 bis 134 vorgesehen, die in der Abwicklung der Fig. 26 und 27 als gerade Kanäle dargestellt sind. Die Zuführung 101 ist über den unterbrochenen Verbindungskanal 129 mit der Ringkammer 133 Verbunden, die wiederum mit dem Heizer 120 verbunden ist.

Der Heizer 120 ist über die Ringkammer 134 mit der Abführung 201 verbunden. Analog ist die Zuführung 107 über die Ringkammer 131 mit dem Kühler 118 verbunden, der wiederum über die Ringkammer 132 und den unterbrochenen Verbindungskanal 128 mit der Abführung 207 verbunden ist. Durch Drehung des Rotationskörpers 115 in Richtung des Pfeils 116 werden die Durchgangskanäle 126 und die unterbrochenen Verbindungskanäle 128, 129 anderen Zuführungen und Abführungen zugeordnet. Diese Verschiebung findet vorzugsweise schrittweise so statt, dass der Rotationskörper 115 immer dann zum Stehen kommt, wenn sich die Mündungsöffnungen der in dem Rotationskörper 115 vorgesehenen Kanäle 126, 128, 129 mit den entsprechenden Öffnungen in dem Gehäuse 125 überdecken.

In Fig. 27 ist der Rotationskörper 114 um einen Schritt verdreht gegenüber der Darstellung der Fig. 26 dargestellt. In Fig. 27 ist die Zuführung 102 über den Heizer 120 mit der zugehörigen Abführung 202 verbunden. Analog ist die Zuführung 108 über den Kühler 118 mit der zugehörigen Abführung 208 verbunden. Die übrigen Zuführungen 101, 103 bis 107, 109 bis 112 sind über die Durchgangskanäle 126 direkt mit den zugehörigen Abführungen 201, 203 bis 207, 209 bis 212 verbunden.

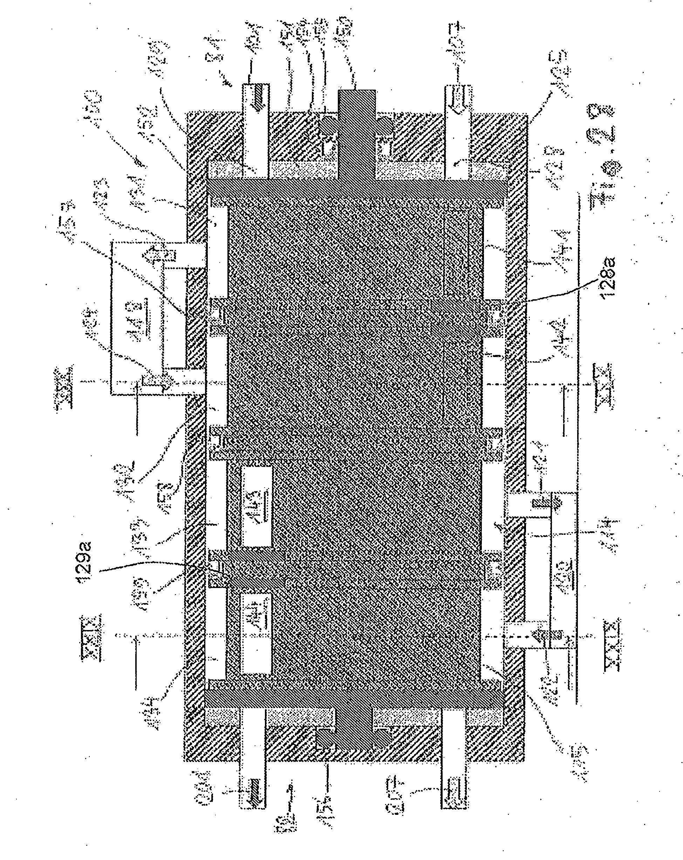

In den Fig. 28 bis 30 ist das in den Fig. 26 und 27 vereinfacht dargestellte Rotationsventil 100 etwas detaillierter dargestellt. In dem längs aufgeschnitten dargestellten zylindrischen Gehäuse 125 ist der Rotationskorper 115 mit Hilfe einer gelagerten und zur Umgebung hin abgedichteten Antriebswelle 150 drehbar angetrieben. Zur axialen Lagerung des Rotationskörpers 115 sind an jeder Stirnseite des Gehäuses 125 jeweils zwei keramische Dichtplatten 151, 152 vorgesehen. Die keramische Dichtplatte 151 ist dem Gehäuse 125 fest zugeordnet. Die keramische Dichtplatte 152 ist dem Rotationskörper 115 zugeordnet und dreht sich mit diesem relativ zu der keramischen Dichtplatte 151 und dem Gehäuse 125. Die beiden Plattenpaare können über eine (nicht dargestellte) Federeinrichtung elastisch gegeneinander vorgespannt sein.

Vier Ringkammern oder Ringräume 131 bis 134 stehen jeweils über eine radiale Öffnung 141 bis 144 mit dem zugehörigen Verbindungskanal 128, 129 in Verbindung. Die radialen Öffnungen 141 bis 144 stellen ein radiales Durchbruchsfenster dar, das eine Fluidverbindung zwischen den Ringkammern 131-134 und den radial innerhalb angeordneten axialen Verbindungskanälen 128, 129 schafft, die im Gegensatz zu allen anderen Verbindungskanälen 126 durch mindestens je eine Trennwand 128c bzw. 129c in zwei Teilkanäle 128a und 128b bzw. 129a und 129b unterteilt sind. Die Zuordnung zwischen den Teilkanälen 128a, 128b bzw. 129a, 129b und den Ringkammern 131 bis 134 sind vorzugsweise so gewählt, dass je zwei benachbarte Ringkammern 131, 132 und 133, 134 mit korrespondierenden, also miteinander fluchtenden Zuführungen 101; 107 und Abführungen 201; 207 verbunden sind. Dadurch wird, abhängig von der Stellung bzw. Verdrehung des Rotationskörpers 115, immer ein Fluidweg durch den Heizer 120 und ein anderer der insgesamt zwölf vorhandenen Fluidwege durch den Kühler oder Rückkühler 118 geführt.

In Fig. 28 gelangt das Fluid von der Zuführung 101 über die radiale Öffnung 143 und die Ringkammer 133 zum Heizer 120, wie durch einen Pfeil 121 angedeutet ist. Durch einen weiteren Pfeil 122 ist angedeutet, dass das Fluid von dem Heizer 120 über die Ringkammer 134 und die radiale Öffnung 144 zur Abführung 201 gelangt. Analog gelangt das Fluid von der Zuführung 107 über die radiale Öffnung 141 und die Ringkammer 131 in den Kühler 118, wie durch einen Pfeil 123 angedeutet ist. Durch einen weiteren Pfeil 124 ist angedeutet, dass das Fluid von dem Kühler 118 über die Ringkammer 132 und die radiale Öffnung 142 zu der Abführung 207 gelangt.

In Fig. 28 sieht man, dass die Rotorachse mit den Lagern 155, 156 in dem zylindrischen Gehäuse gelagert ist und das gesamte innere Volumen durch ein Dichtelement 154 gegenüber der Umgebung abgedichtet ist. Darüber hinaus werden abgesehen von den beiden vorzugsweise keramischen Flächendichtungspaaren 151, 152 nur drei weitere Dichtelemente 157, 158, 159 benötigt, um die vier Ringkammern 131 bis 134 in axialer Richtung gegeneinander abzudichten.

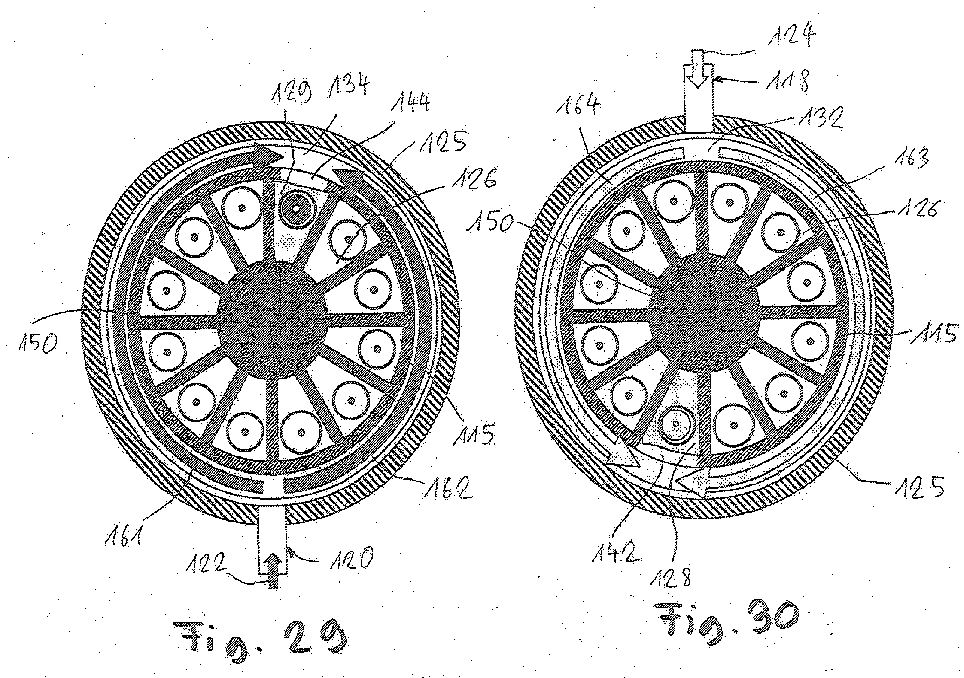

In den Fig. 29 und 30 sind zwei Schnitte durch das Rotationsventil 100 aus Fig. 28 dargestellt. In Fig. 29 ist durch Pfeile 161 und 162 angedeutet, wie das Fluid von dem Heizer 120 zu der radialen Öffnung 144 gelangt. In Fig. 30 ist durch weitere Pfeile 163, 164 angedeutet, wie das Fluid von dem Kühler 118 zu der radialen Öffnung 142 gelangt. Darüber hinaus zeigen die Schnitte den in 12 achsiale Kammern unterteilten Rotationskörper 115, der vorzugsweise aus Kunststoff-Spritzgusselementen auf einer gemeinsamen Welle 150 mit Formschluss aufgestapelt sind. Die Bezugszeichen 128 und 129 kennzeichnen die Durchgangskanäle die mittels Trennwänden 128c bzw. 129c in je zwei Teilkanäle 128a,128b bzw. 129a,129b unterteilt sind.

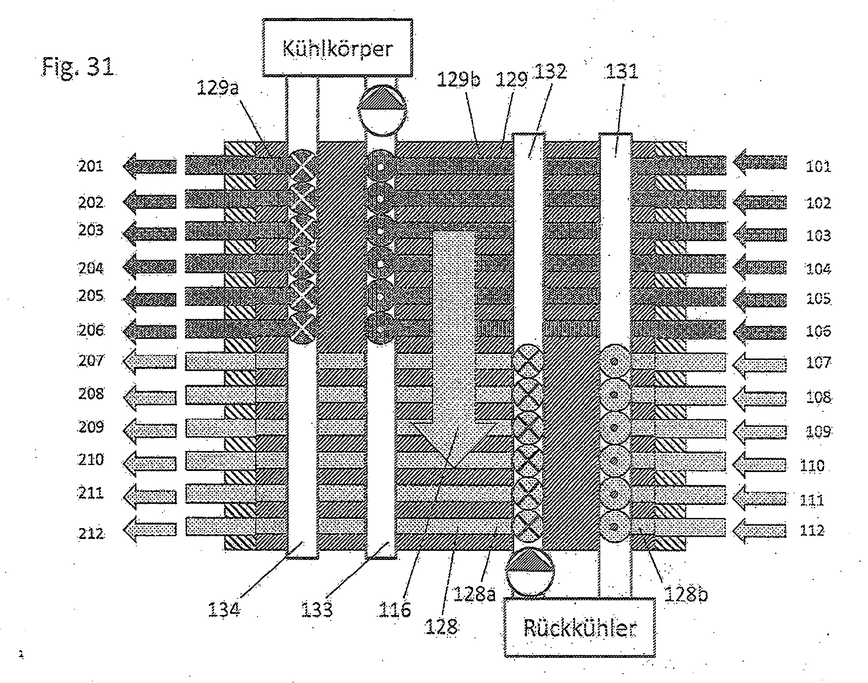

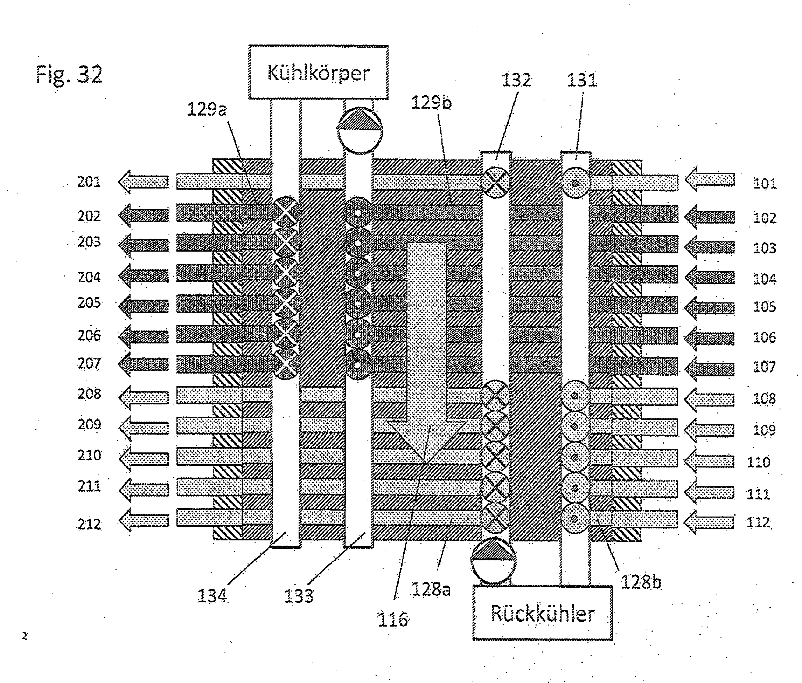

Zur Steuerung der Fluidkreisläufe der Verdampfungs-/Kondensationszonen ist die Verwendung eines geringfügig modifizierten Ventiles vorteilhaft, dessen Abwicklung in den Fig. 31 und 32 in zwei Stellungen dargestellt ist.

Wie in Fig. 31 dargestellt, weist der Rotationskörper 115 nur noch unterbrochene Durchgangskanäle nach Art der Bezugszeichen 128 und 129 auf, die jeweils wieder durch Trennwände 128c und 129c in Teilkanäle 128a, 128b bzw. 129a, 129b unterteilt sind und radiale Durchbruchsfenster zu den Ringräumen 131 bis 134 aufweisen, die ihrerseits paarweise mit zwei Wärmeübertragern in Verbindung stehen, die mit "Kühlkörper" und "Rückkühler" bezeichnet sind. In der dargestellten Ausführungsform gibt es damit keine reinen Durchgangskanäle der Kategorie entsprechend Bezugszeichen 126 mehr.

Die Fig. 32 zeigt das Rotationsventil in der nachfolgenden Stellung.

Diese modifizierte Ausführungsform ermöglicht eine von der Schaltstellung des Rotationsventils abhängige Zuordung thermisch aktiver Module 301 bis 312 zu mindestens zwei getrennten mit eigenen Fördereinrichtungen angetriebenen Fluidkreisläufen innerhalb derer die zugeordneten Module parallel durchströmt werden.

Durch die jeweilige Parallelführung zweier Gruppen von Durchgangskanälen 128 und 129 im Rotationskörper 115 werden mehrere radiale Durchbruchsfenster benötigt, die eine Strömungsverbindung in je eine gemeinsame der insgesamt vier benötigten Ringkammern herstellen. Bevorzugt können im Rotationskörper die Trennwände innerhalb einer Gruppe von Durchgangskanälen entfallen, wodurch dann pro Ringkammer nur noch ein großes radiales Durchbruchsfenster benötigt wird, was hier bildlich nicht näher ausgeführt ist.

Die beiden Ausführungsformen nach Fig. 26, 27 bzw. 31, 32 stellen nur zwei Beispiele für die Aufteilung der Durchgangskanäle entsprechend der Kategorien 126, 128 und 129 dar. Weitere Aufteilungen der Durchgangskanäle auf diese Kategorien sind selbstverständlich möglich und für besondere Anwendungen auch sinnvoll.

Insbesondere können einzelne Durchgangskanäle auch ganz verschlossen sein, um dort adiabate Prozesse zu erzwingen. Vorzugsweise wird das durch Verschluss der radialen Öffnungen der Kanäle 128a, 128b, 129a und 129b in Fig. 31 bewirkt.

Das Rotationsventil 100 hat unter anderem die folgenden Vorteile: Hohe Integration von Schaltfunktionen ersetzt zwei herkömmliche Rotationsventile; reduzierter Aufwand für Antrieb und Steuerung; kompakte, materialsparende Bauweise; einfache, kostengünstige Herstellbarkeit, zum Beispiel aus Kunststoff-Spritzgussteilen; einfach realisierbare, verschleißarme Flächendichtung über Keramikscheiben beziehungsweise Keramikplatten 151, 152; kurze Strömungswege mit geringem Wärmeaustausch zwischen den einzelnen Strömungswegen; geringe Reibung und erforderliches Antriebsdrehmoment; geringe Bypassverluste.

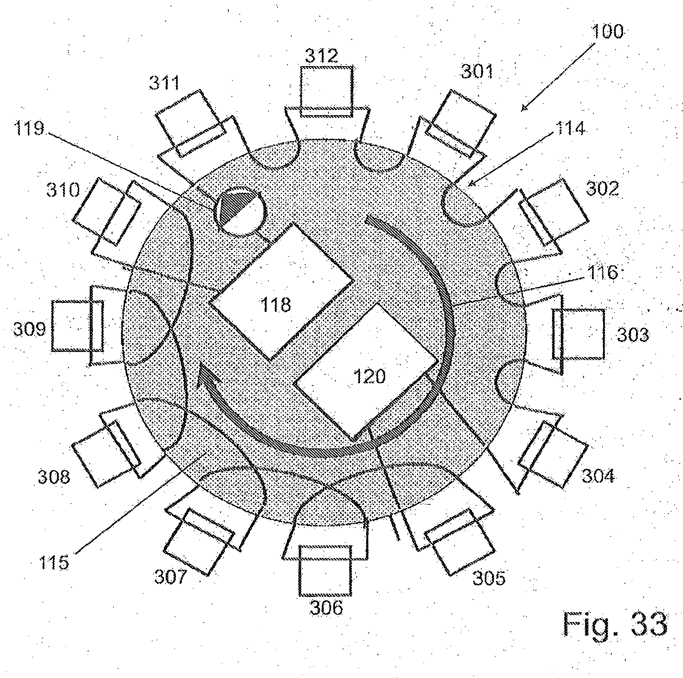

Fig. 33 bis 37 zeigen eine weitere Ausführungsform eines Rotationsventils 100, die eine Abwandlung des Rotationsventils nach Fig. 25 bis Fig. 29 darstellt. Soweit möglich wurden daher die Bezugszeichen des Beispiel nach Fig. 25-29 übernommen.

Im Unterschied zum Beispiel nach Fig. 25 werden im Beispiel nach Fig. 33 ein Teil der thermisch aktiven Module 301-312 in entgegengesetzter Richtung durchströmt, in der gezeigten Schaltstellung nämlich die Module 305 bis 310. Der Teil der entgegengesetzt durchströmten Module ändert sich mit der Schaltstellung des Rotationsventils 100 bzw. seines Rotationskörpers 115.

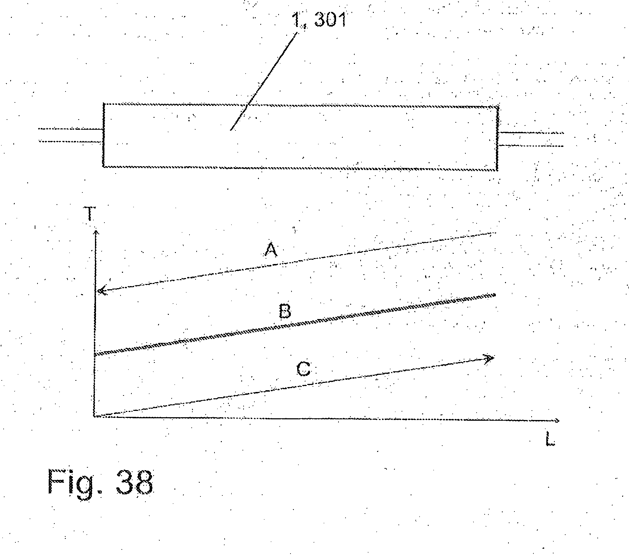

Jeweils die Hälfte der Module 301-312 befindet sich in der sequentiellen Durchströmung nach dem Kühler 118 und vor dem Heizer 120 (Adsorptionsmodus), und die andere Hälfte befindet sich jeweils nach dem Heizer 120 und vor dem Kühler 118 (Desorptionsmodus). Durch die umgekehrte Durchströmung ergibt sich eine bessere Anpassung an den Verlauf der Temperatur T der Module 301-312 über ihre Länge L. Fig. 38 zeigt eine veranschaulichende Darstellung des Temperaturverlaufs A des Fluids im Aufheizprozess (nach Heizer 120), des Temperaturverlaufs B eines Moduls 1 über seine Länge L, und des Temperaturverlaufs C des Fluids im Abkühlprozess. Bezüglich der Fluidsströme A, C über dem Modul 1 sind die umgekehrten Richtungen durch Pfeile symbolisiert.

Selbstverständlich können die beiden Gruppen jeweils parallel durchströmter Module auch unterschiedlich groß sein, um einer unterschiedlichen Kinetik der zugeordneten Prozesse Rechnung zu tragen.

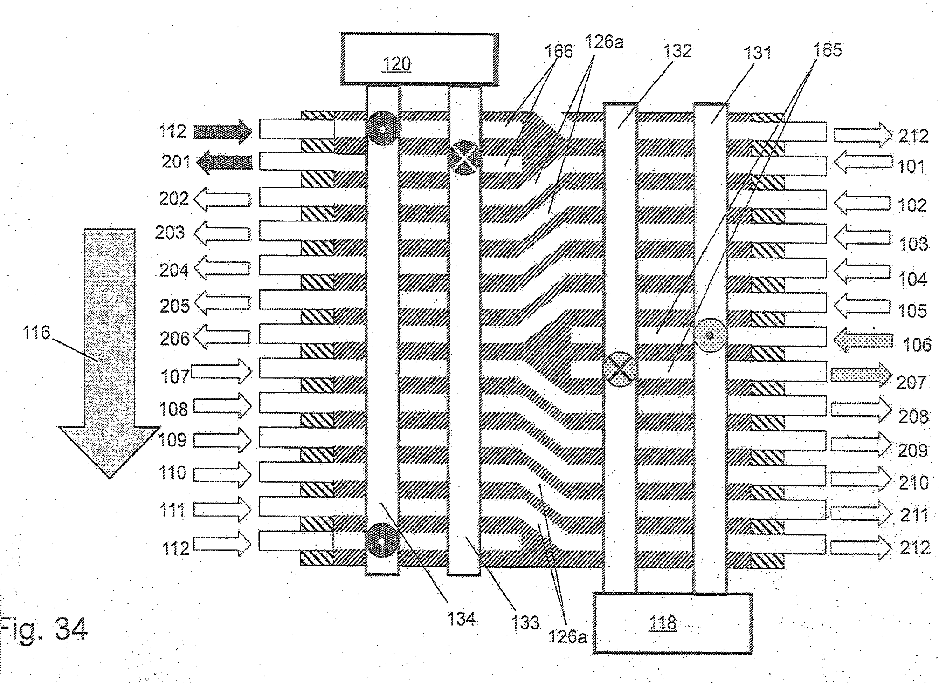

Die konstruktive Realisierung der Umkehr der Fließrichtung durch die Module 301-312 wird durch Sackkanäle 165, 166 in dem Rotationskörper 115 erreicht. Jeder der Sackkanäle 165, 166 umfasst zwei Kanäle, die über je eine radial gerichtete Verbindungsöffnung in jeweils eine der Ringkammern 131, 132, 133, 134 münden. Im Beispiel der Schaltstellung nach Fig. 34 strömt das Fluid von der Zuführung 106 durch einen Kanal des Sackkanals 165 in die Ringkammer 131, von dort über den Kühler 118 in die Ringkammer 132 und dann durch den zweiten Kanal des Sackkanals 165 in Gegenrichtung zu der Abführung 207. Die Abführung 207 ist dabei auf der gleichen Stirnseite des Rotationsventils 100 angeordnet wie die Zuführung 106.

Die über radial gerichtete Öffnungen erfolgende Einströmung bzw. Ausströmung von den einzelnen Kanälen der Sackkanäle 165, 166 in die bzw. aus den Ringkammern 131-134 ist jeweils durch ein Strömungspfeilsymbol in Draufsicht dargestellt, also ein Kreis mit Punkt ("Pfeilspitze") für in die Ringkammer einströmendes Fluid und ein Kreis mit Kreuz (Pfeilschaft") für aus der Ringkammer ausströmendes Fluid.

Eine analoge Fluidführung liegt auf der gegenüberliegenden Stirnseite des Rotationsventils für die Zuführung 112, die Abführung 201, den Sackkkanal 166 und die Ringkammern 133, 134 vor, zwischen denen der Heizer 120 angeordnet ist.

Die Sackkanäle 165, 166 führen zu der konstruktiven Besonderheit, dass die den Rotationskörper vollständig durchlaufenden Durchgangskanäle 126 über ihren Verlauf in dem Rotationskörper 115 jeweils einen Versatz 126a in Umfangsrichtung des Rotationskörpers (Winkelversatz) aufweisen. Der Versatz entspricht einer Winkeleinheit benachbarter Zuführungen bzw. Abführungen des Rotationskörpers, also zum Beispiel 30° im konkreten Fall von 12 Zuführungen und Abführungen auf jeder Stirnseite. Ingesamt wird hierdurch eine räumliche Umgehung der Sackkanäle erreicht, auf deren Ebene sonst einige der Durchgangskanäle 126 verlaufen würden. Dabei ergibt sich zugleich die erwünschte serielle Durchströmung der angeschlossenen Module entsprechend Fig. 33.

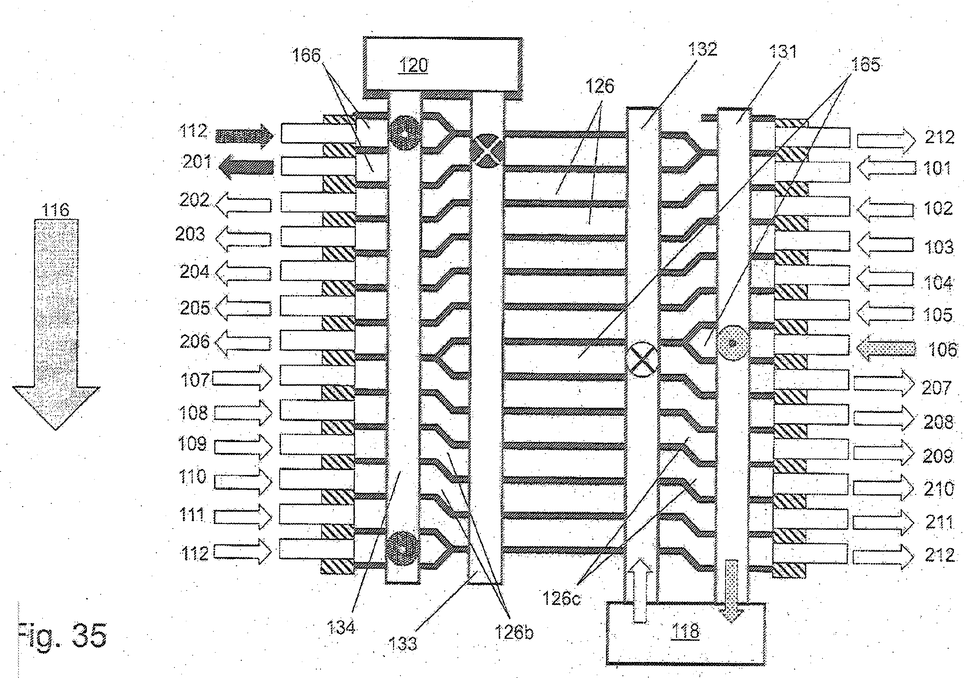

Fig. 35 zeigt eine Abwandlung des Beispiels aus Fig. 34, bei der dieser Versatz 126a sich aus einem ersten Teilversatz 126b und einem zweiten Teilversatz 126c summiert, wobei die beiden Teilversätze 126b, 126c eines Durchgangskanals 126 in verschiedenen baulichen Abschnitten des Rotationskörpers 115 angeordnet sind, vorliegend nämlich jeweils zwischen den Ringkammern 131 und 132 sowie zwischen den Ringkammern 133 und 134. Hierdurch lässt sich ein durch den Versatz bedingter Druckabfall verringern bzw. die konstruktive Realisierung insgesamt vereinfachen.

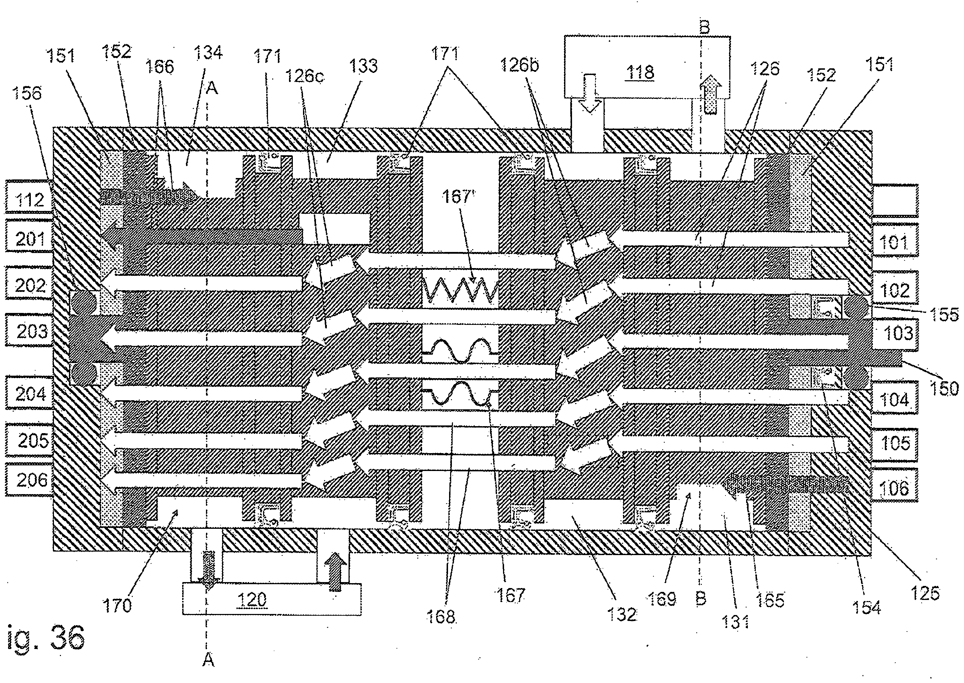

Fig. 36 zeigt eine zu Fig. 28 analoge Darstellung des Rotationsventils mit detaillierten Vorschlägen für eine konstruktive Realisierung. Wie in Fig. 28 erfolgt eine stirnseitige Abdichtung des Rotationskörpers 115 gegenüber dem Gehäuse 125 jeweils mittels Paaren von keramischen Dichtplatten 151, 152, von denen jeweils eine Dichtplatte 152 mit dem Rotationskörper 115 mitdreht und eine Dichtplatte 151 gehäusefest montiert ist. Alternativ kann eine Dichtplatte durch separate kleine Dichtscheiben ersetzt werden.

Die Dichtplatten 151, 152 werden durch eine Kraftbeaufschlagung zur Verbesserung der Dichtwirkung gegeneinander abgestützt bzw. aufeinander gedrückt. Die Kraftbeaufschlagung erfolgt mittels eines federelastischen Glieds 167. Dieses ist als Mehrzahl elastischer und im Zuge einer Montage gestauchter Verbindungsstücke 168 (für ein Verbindungsstück schematisch dargestellt) ausgebildet, wobei die Verbindungsstücke als Wellbälge oder Schlauchabschnitte ausgeformt sind. In alternativer oder auch ergänzender Ausführungsform kann auch ein separates Federglied 167' vorgesehen sein.

Die gemäß der Anzahl der Durchgangskanäle 126 zehn Verbindungsstücke 168 befinden sich zwischen einem ersten Teilkörper 169 und einem zweiten Teilkörper 170 des Rotationskörpers 115. Die beiden Teilkörper 169, 170 umfassen jeweils zwei der Ringkanäle 131-134 und jeweils zwei Dichtelemente 171 entlang der Umfangsränder der Teilkörper 169, 170, durch die die Ringkammern 131-134 abgedichtet werden.

Die Dichtelemente 171 können zumindest über einen gewissen Hub in axialer Richtung gleiten, so dass eine der elastischen Vorspannung bzw. Kraftbeaufschlagung entsprechende axiale Bewegbarkeit der Teilkörper 169, 170 zueinander möglich ist.

Um eine elastische Verdrehung der Teilkörper 169, 170 zueinander zu vermeiden, können zudem nicht dargestellte formschlüssige Mittel bzw. in Umfangsrichtung wirkende Anschläge vorgesehen sein, die eine axiale Verschiebung der Teilkörper erlauben, eine Verdrehung zueinander aber blockieren.

Alternativ oder ergänzend kann zwischen den Teilkörper auch eine zusätzliche Feder vorgesehen sein, um die Dichtplatten 151, 152 mit einer Vorspannkraft zu beaufschlagen.

Die Lagerung der Welle 150 des Rotationskörpers 115 in Lagern 155, 156 und mit einer Wellendichtung 154 erfolgt wie im Beispiel nach Fig. 28. Die Welle kann gemäß der beiden Teilkörper 169, 170 zweigeteilt sein bzw. nur aus stimseitigen Wellenzapfen bestehen. Es kann sich je nach Anforderungen auch um eine durchgehende Welle 150 handeln, auf der die Teilkörper 169, 170 axial verschiebbar aufgesetzt sind.

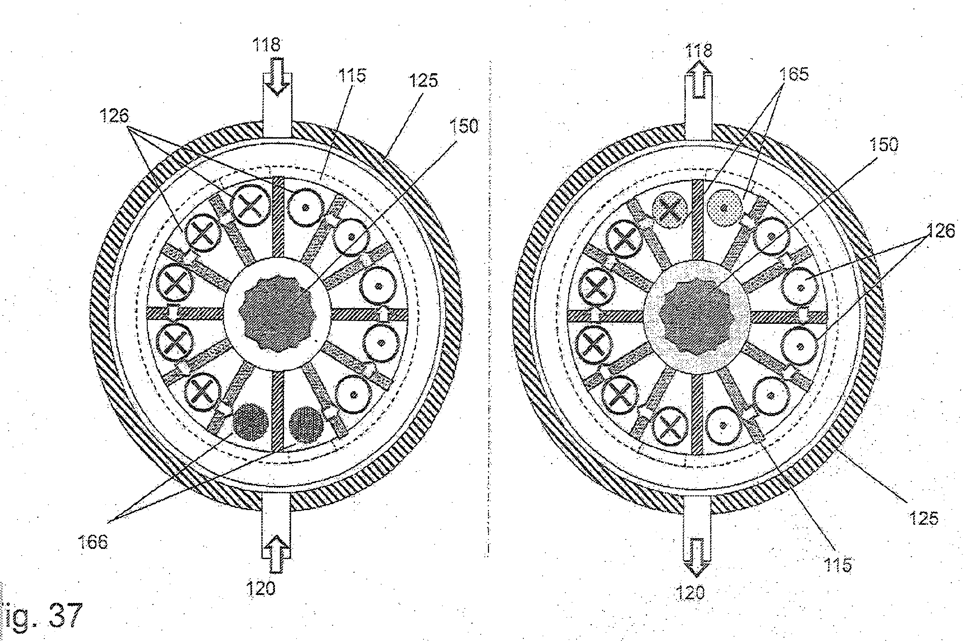

Fig. 37 zeigt zur weiteren Veranschaulichung Schnittansichten auf das Rotationsventil 100 entlang der Schnittlinien A-A und B-B aus Fig 28. Die oberen radialen Anschlüsse führen jeweils zu dem Heizer 120 und die unteren radialen Anschlüsse führen jeweils zu dem Kühler 118. Erkennbar sind zudem die Sackkanäle 165 und 166 sowie die in verschiedenen Richtungen durchströmten Durchgangskanäle 125.

Es versteht sich, dass die besonderen Merkmale der einzelnen Ausführungsbeispiele je nach Anforderungen sinnvoll miteinander kombiniert werden können.

## Patentansprüche

1. Rotationsventil, umfassend
einen Zuführbereich (6b, 19; 81) mit einer Mehrzahl von ortsfesten separaten Zuführungen als Öffnungen (6c, 19a; 101-112) für mehrere Ströme eines Fluids und
einen Abführbereich (82) mit einer insbesondere gleichen Mehrzahl von ortsfesten separaten Abführungen als Öffnungen (6d, 17a; 201-211) für die Ströme des Fluids,
wobei zwischen dem Zuführbereich (6b, 19; 81) und dem Abführbereich (82) ein Schaltbereich mit einem um eine Achse drehbaren Schaltglied (16, 31, 24; 114) vorgesehen ist,
wobei in einer ersten Stellung des Schaltglieds (16; 114) die Mehrzahl der Zuführungen (6c, 19a; 101-112) mit der Mehrzahl der Abführungen (6d, 17a; 201-212) in einer ersten Zuordnung verbunden ist und wobei in einer zweiten Stellung des Schaltglieds (16; 114) die Mehrzahl der Zuführungen (6c, 19a; 101-112) mit der Mehrzahl der Abführungen (6d, 17a; 201-212) in einer zweiten Zuordnung verbunden ist, **dadurch gekennzeichnet,**
**dass** das Schaltglied (16; 114) eine Mehrzahl von von den Fluidströmen axial Richtung der Drehachse durchströmten, mit dem Schaltglied mitbewegten Öffnungen (16a, 126, 128, 129) umfasst, die eine Mehrzahl von ortsfesten, axial gerichteten Öffnungen von Zuführungen bzw. Abführungen (19a, 101 bis 112, 201 bis 212) im Zuge der Drehung des Schaltglieds (16; 114) wechselnd überdecken,
wobei die verschiedenen Zuordnungen der Zuführungen (19a; 101-112) zu den Abführungen (17a; 201-212) durch die wechselnden Überdeckungen der axial gerichteten Öffnungen (16a, 19a) erfolgen, wobei das Schaltglied (16) als axialer Längskörper ausgebildet ist, der in einer ortsfesten, im Wesentlichen zylindrischen Wandung (17) aufgenommen ist, wobei entweder die Zuführungen (19a) oder die Abführungen (17a) über radial gerichtete Öffnungen der Wandung (17) angebunden sind und zumindest eines von beiden, Längskörper (16) oder Wandung (17), ringförmig umlaufende Dichtglieder (16b) aufweist, die dichtend mit dem jeweils anderen der beiden, Längskörper (16) oder Wandung (17), zusammenwirken, so dass die Öffnungen (17a) der Wandung voneinander separiert sind und die Dichtglieder (16b) einstückig mit dem Längskörper und/oder der Wandung ausgebildet sind.

2. Rotationsventil nach Anspruch 1, **dadurch gekennzeichnet, dass** der Längskörper eine der Mehrzahl von Zuführungen (19a) entsprechende Anzahl axial gerichteter, separater Kanäle (16a) für die Fluidströme aufweist, wobei jeder Kanal eine radiale Öffnung (16d) zur Verbindung mit einer der Öffnungen (17a) der Wandung aufweist.

3. Rotationsventil nach Anspruch 1 oder 2, dadurch gekehnzeichnet, dass die Dichtglieder Dichtmittel umfassen, die an radialen Vorsprüngen (16b) von zumindest einem von beiden, Längskörper (16) oder Wandung (17), aufgenommen sind.

4. Rotatiohsventil nach einem der Ansprüche 1 bis 3, **dadurch gekennzeichnet, dass** der Längskörper (16) als im Wesentlichen einstückiges Bauteil ausgeformt ist.

5. Rotationsventil nach einem der Ansprüche 1 bis 4, **dadurch gekennzeichnet, dass** der Längskörper (16) eine Mehrzahl von in axialer Richtung gestapelten Längskörperelemehten (21) umfasst.

6. Rotationsventil nach Anspruch 5, **dadurch gekennzeichnet, dass** zumindest einige der Längskörperelemente (21) als Gleichteile ausgebildet sind.

7. Rotationsventil nach eihem der vorhergehehden Ansprüche, **dadurch gekennzeichnet, dass** das Schaltglied in axialer Richtung von einer drehbaren Welle (18) durchgriffen ist, wobei insbesondere die Welle (18) als Zuganker zur Halterung mehrerer axial hintereinander angeordneter Bauteile (16, 21, 24, 31) des Schaltglieds ausgebildet ist.

8. Rotationsventil nach einem der vorhergehenden Ansprüche, **dadurch gekennzeichnet, dass** das Schaltglied endseitig über ein Lagerglied drehbar gelagert ist, wobei insbesondere das Lagerglied eine Rotationsdichtung zur Abdichtung des Fluids aufweist.

9. Rotationsventil nach einem der vorhergehenden Ansprüche, **dadurch gekennzeichnet, dass** die Anzahl der Zuführungen und Abführungen zumindest vier, insbesondere zumindest acht beträgt.

10. Wärmepumpe, umfassend
eine Mehrzahl von Hohlelementen (1), wobei in jedem der Hohlelemente (1) zumindest eine erste Zone (A) und eine zweite Zone (B) zur Verlagerung eines in dem Hohlelement (1) angeordneten Arbeitsmittels in Abhängigkeit thermodynamischer Zustandsgröße vorliegen, wobei jedes der Hohlelemente (1) mit seiner ersten Zone (A) mit einem von einem ersten Fluid durchströmbaren ersten Strömungskanal (3) dies Hohlelements (1) und mit seiner zweiten Zone (B) mit einem von einem zweiten Fluid durchströmbaren zweiten Strömungskanal (4) des Hohlelements (1) thermisch verbunden ist, so dass jeweils Wärmeenergie zwischen einem der Fluide und einer der Zonen (A, B) austauschbar ist, und
eine Ventilanordnung (6, 7), wobei die Strömungskanäle einer der Zonen durch die Ventilanordnung (6, 7) sequentiell miteinander verschaltbar sind und eine Reihenfolge der Verschaltung mittels der Ventilanordnung (6, 7) im Zuge eines Betriebs der Wärmepumpe wechselt,
**dadurch gekennzeichnet,**
**dass** die Ventilanordnung (6, 7) ein Rotationsventil nach einem der vorhergehenden Ansprüche umfasst.

11. Wärmepumpe nach Anspruch 10, **dadurch gekennzeichnet, dass** die Hohlelemente (1) als Adsorberelemente ausgebildet sind, wobei die Adsorberelemente im Bereich der ersten Zone (A) einen Adsorptions/Desorptionsbereich für das Arbeitsmittel aufweisen und im Bereich der zweiten Zone (B) einen Kondensations/Verdampfungsbereich für das Arbeitsmittel.

12. Wärmepumpe nach Anspruch 10 oder 11, **dadurch gekennzeichnet, dass** zumindest einer der Strömungskanale endseitige Anschlussstücke (15) aufweist, wobei das Fluid im Bereich der Anschlussstücke (15) auf eine Mehrzahl von Strömungswege (14) verteilt wird.

13. Wärmepumpe nach einem der Ansprüche 10 bis 12, **dadurch gekennzeichnet, dass** ein oder mehrere Strömungswege (14) für das Fluid durch einen Spalt zwischen aufeinander angeordneten Unterelementen (10) ausgebildet ist.

14. Wärmepumpe nach einen der Ansprüche 10 bis 13, **dadurch gekennzeichnet, dass** die Durchströmungswege (14) mit oberflächenvergrößernden Strukturen, insbesondere Rippen, versehen sind.

15. Wärmepumpe nach einem der Ansprüche 10 bis 14, **dadurch gekennzeichnet, dass** die Hohlelemente (1) jeweils als separate Module ausgebildet sind, die insbesondere nicht in thermischem Kontakt miteinander stehen.

16. Wärmepumpe nach Anspruch 15, **dadurch gekennzeichnet**, das zwischeh benachbarten Hohlelementen (1) eine Schicht aus einem thermisch isolierenden, insbesondere elastischen Material angeordnet ist.

17. Wärmepumpe nach einem der Ansprüche 10 bis 16, **dadurch gekennzeichnet, dass** die Ventilanordnung als Verschaltung einer Anzahl von diskreten, insbesondere elektromagnetisch betätigten Mehrwegventilen ausgebildet ist.

18. Wärmepumpe nach einem der Ansprüche 10 bis 17, **dadurch gekennzeichnet, dass** die Ventilanordnung zumindest ein, insbesondere zumindest zwei Rotationsventile (100) nach einem der Ansprüche 1 bis 9 umfasst.

19. Wärmepumpe nach Anspruch 18, **dadurch gekennzeichnet, dass** zumindest einige der Strömungskanäle der Hohlelemente (1) über elastische deformierbare Anschlussstücke mit den Zuführungen und/oder Abführungen (6c, 6d, 30) des Rotationsventils (100) verbunden sind.

20. Wärmepumpe nach einem der Ansprüche 10 bis 19, **dadurch gekennzeichnet, dass** das zweite Fluid Luft ist.

21. Wärmepumpe nach einem der Ansprüche 10 bis 20, **dadurch gekennzeichnet, dass** das Rotationsventil (100) des zweiten Fluids über ein Schaltglied (24 mit einer eine stufig gewendelten Trennwand (25) verfügt, wobei insbesondere eine Anzahl von Stufen der Wendelung einer Anzahl von Hohlelementen (1) entspricht.

22. Wärmepumpe nach Anspruch 21, **dadurch gekennzeichnet, dass** das Schaltglied (24) aus einer Mehrzahl von insbesondere als Gleichteilen ausgebildeten, axial hintereinander angeordneten Schaltgliedelementen (4.9, 50) ausgebildet ist.

23. Wärmepumpe nach einem der Ansprüche 10 bis 22, **dadurch gekennzeichnet, dass** das zweite Fluid über ein Rotationsventil (100) mit zwei Strömungskanälen (44, 45) über die zweiten Zonen (B) der Hohlelemente (1) verteilt wird.

## Claims

1. A rotating valve, comprising
an inlet region (6b, 19; 81) which has a plurality of stationary, separate inlets as openings (6c, 19a; 101-112) for multiple flows of a fluid; and
an outlet region (82) which has an, in particular, equal plurality of stationary, separate outlets as openings (6d, 17a; 201-211) for the flows of the fluid,
wherein a switching region having a switching member (16, 31, 24; 114) which is able to rotate around an axis is provided between the inlet region (6b, 19; 81) and the outlet region (82),
wherein the plurality of inlets (6c, 19a; 101-112) is connected in a first position of the switching member (16; 114) to the plurality of outlets (6d, 17a; 201-212) in a first assignment, and
wherein the plurality of inlets (6c, 19a; 101-112) is connected in a second position of the switching member (16; 114) to the plurality of outlets (6d, 17a; 201-212) in a second assignment,
**characterised in that**
the switching member (16; 114) includes a plurality of openings (16a, 126, 128, 129) through which the fluid flows axially in the direction of the rotation axis and which are moved together with the switching member, these openings alternately covering a plurality of stationary, axially oriented openings of inlets or outlets (19a, 101 through 112, 201 through 212) during the course of the rotation of the switching member (16; 114);
wherein the different assignments of the inlets (19a; 101-112) to the outlets (17a; 201-212) are carried out by the alternating covering of the axially oriented openings (16a, 19a), wherein the switching member (16) is designed as an axial longitudinal body which is accommodated in a stationary, substantially cylindrical wall (17), wherein either the inlets (19a) or the outlets (17a) are connected via radially oriented openings in the wall (17) and at least one of the two, longitudinal body (16) or wall (17), has annular circumferential sealing members (16b) which interact with the other of the two, longitudinal body (16) or wall (17), to form a seal, so that the openings (17a) in the wall are separated from each other and the sealing members (16b) are designed to form a single piece with the longitudinal body and/or the wall.

2. The rotating valve according to claim 1,
**characterised in that** the longitudinal body has a number of axially oriented, separate channels (16a) which correspond to the plurality of inlets (19a), for the fluid flows, wherein each channel has a radial opening (16d) for connection to one of the openings (17a) in the wall.

3. The rotating valve according to claim 1 or 2,
**characterised in that** the sealing members include sealing means which are accommodated on radial projections (16b) of at least one of the two, longitudinal body (16) or wall (17).

4. The rotating valve according to one of claims 1 to 3,
**characterised in that** the longitudinal body (16) is designed as a substantially one-piece component.

5. The rotating valve according to one of claims 1 to 4,
**characterised in that** the longitudinal body (16) includes a plurality of longitudinal body elements (21) which are stacked in the axial direction.

6. The rotating valve according to claim 5,
**characterised in that** at least some of the longitudinal elements (21) are designed as equivalent parts.

7. The rotating valve according to one of the preceding claims, **characterised in that** a rotational shaft (18) engages with the switching member in the axial direction, wherein the shaft (18) is designed, in particular, as a tension member for holding multiple components (16, 21, 24, 31) of the switching member disposed consecutively in the axial direction.

8. The rotating valve according to one of the preceding claims, **characterised in that** the switching member is rotationally supported on a bearing member at one end face, wherein the bearing member has, in particular, a rotating seal for sealing the fluid.

9. The rotating valve according to one of the preceding claims, **characterised in that** the number of inlets and outlets is at least four, in particular at least eight.

10. A heat pump, comprising
a plurality of hollow elements (1), wherein at least one first zone (A) and one second zone (B) is provided in each of the hollow elements (1) for moving a working medium disposed in the hollow element (1) as a function of thermodynamic status variables,
wherein each of the hollow elements (1) is thermally connected by its first zone (A) to a first flow channel (3) of the hollow element (1) through which a first fluid may flow and thermally by its second zone (B) to a second flow channel (4) of the hollow element (1) through which a second fluid may flow, so that thermal energy may be exchanged between one of the fluids and one of the zones (A, B), and
a valve configuration (6, 7), wherein the flow channels of one of the zones are sequentially interconnectable to each other by the valve configuration (6, 7) and a sequence of the interconnections is changed by means of the valve configuration (6, 7) during the course of operating the heat pump,
**characterised in that**
the valve configuration (6, 7) includes a rotating valve according to one of the preceding claims.

11. The heat pump according to claim 10, **characterised in that** the hollow elements (1) are designed as adsorber elements, wherein the adsorber elements have an adsorption/desorption region for the working medium in the region of the first zone (A) and a condensation/evaporation region for the working medium in the region of the second zone (B).

12. The heat pump according to claim 10 or 11,
**characterised in that** at least one of the flow channels has connecting pieces (15) on its end, wherein the fluid is distributed to a plurality of flow paths (14) in the region of the connecting pieces (15).

13. The heat pump according to one of claims 10 to 12,
**characterised in that** one or multiple flow paths (14) for the fluid is formed by a gap between subelements (10) that are disposed on top of each other.

14. The heat pump according to one of claims 10 to 13,
**characterised in that** the through-flow channels (14) are provided with surface-enlarging structures, in particular ribs.

15. The heat pump according to one of claims 10 to 14,
**characterised in that** the hollow elements (1) are each designed as separate modules, which, in particular, are not in thermal contact with each other.

16. The heat pump according to claim 15, **characterised in that** a layer of thermally insulating, in particular elastic, material is disposed between adjacent hollow elements (1).

17. The heat pump according to one of claims 10 to 16,
**characterised in that** the valve configuration is designed as an interconnection of a number of discrete, in particular, electromagnetically actuated multi-way valves.

18. The heat pump according to one of claims 10 to 17,
**characterised in that** the valve configuration includes at least one, in particular at least two, rotating valves (100) according to one of claims 1 to 9.

19. The heat pump according to claim 18, **characterised in that** at least some of the flow channels of the hollow elements (1) are connected to the inlets and/or outlets (6c, 6d, 30) of the rotating valve (100) via elastically deformable connecting pieces.

20. The heat pump according to one of claims 10 to 19, **characterised in that** the second fluid is air.

21. The heat pump according to one of claims 10 to 20,
**characterised in that** the rotating valve (100) of the second fluid has a switching member (24) which includes a partition wall (25) which is coiled in a stepped manner, wherein a number of steps of the coil corresponds, in particular, to a number of hollow elements (1).

22. The heat pump according to claim 21, **characterised in that** the switching member (24) is formed from a plurality of switching member elements (49, 50) which are designed, in particular, as equivalent parts and are disposed consecutively in the axial direction.

23. The heat pump according to one of claims 10 to 22,
**characterised in that** the second fluid is distributed over the second zones (B) of the hollow elements (1) via a rotating valve (100) having two flow channels (44, 45).

## Revendications

1. Vanne de rotation comprenant
un espace d'arrivées (6b, 19 ; 81) comprenant une pluralité d'arrivées séparées et fixes servant d'ouvertures (6c, 19a ; 101 - 112) pour plusieurs flux d'un fluide, et
un espace d'évacuations (82) comportant une pluralité, en particulier identique, d'évacuations séparées et fixes servant d'ouvertures (6d, 17a ; 201 - 211) pour les flux du fluide,
où il est prévu, entre l'espace d'arrivées (6b, 19 ; 81) et l'espace d'évacuations (82), un espace de commutation ayant un bloc de commutation (16, 31, 24 ; 114) tournant autour d'un axe,
où, dans une première position du bloc de commutation (16 ; 114), la pluralité des arrivées (6c, 19a ; 101 - 112) est reliée, dans une première correspondance, à la pluralité des évacuations (6d, 17a ; 201 - 212), et
où, dans une deuxième position du bloc de commutation (16 ; 114), la pluralité des arrivées (6c, 19a ; 101 - 112) est reliée, dans une deuxième correspondance, à la pluralité des évacuations (6d, 17a ; 201 - 212),
**caractérisée**
**en ce que** le bloc de commutation (16 ; 114) comprend une pluralité d'ouvertures (16a, 126, 128, 129) déplacées en même temps que le bloc de commutation et traversées axialement dans la direction de l'axe de rotation par les flux de fluide, ouvertures qui, au cours de la rotation du bloc de commutation (16 ; 114), recouvrent de façon alternée une pluralité d'ouvertures d'arrivées ou d'évacuations (19a, 101 à 112, 201 à 212), lesdites ouvertures étant fixes et orientées axialement,
où les différentes correspondances des arrivées (19a ; 101 - 112), par rapport aux évacuations (17a ; 201 - 212), se produisent sous l'effet des recouvrements alternés des ouvertures (16a, 19a) orientées axialement,
où le bloc de commutation (16) est configuré comme un corps longitudinal axial qui est logé dans une paroi (17) fixe, sensiblement cylindrique, où soit les arrivées (19a), soit les évacuations (17a) sont reliées par des ouvertures de la paroi (17) orientées radialement, et au moins l'un des deux composants, à savoir le corps longitudinal (16) ou la paroi (17), présente des éléments d'étanchéité circulaires (16b), de forme annulaire, qui coopèrent en assurant à chaque fois l'étanchéité de l'autre des deux composants, à savoir le corps longitudinal (16) ou la paroi (17), de sorte que les ouvertures (17a) de la paroi sont séparées les unes des autres, et les éléments d'étanchéité (16b) sont configurés en formant une seule et même pièce avec le corps longitudinal et / ou avec la paroi.

2. Vanne de rotation selon la revendication 1, **caractérisée en ce que** le corps longitudinal présente un nombre de canaux (16a) pour les flux de fluide, lesdits canaux étant séparés et orientés axialement, ledit nombre de canaux correspondant à la pluralité d'arrivées (19a), où chaque canal présente une ouverture radiale (16d) servant à la communication avec l'une des ouvertures (17a) de la paroi.

3. Vanne de rotation selon la revendication 1 ou 2, **caractérisée en ce que** les éléments d'étanchéité comprennent des moyens d'étanchéité qui sont logés sur des parties saillantes radiales (16b) d'au moins l'un des deux composants, à savoir le corps longitudinal (16) ou la paroi (17).

4. Vanne de rotation selon l'une quelconque des revendications 1 à 3, **caractérisée en ce que** le corps longitudinal (16) est formé comme un composant pratiquement d'un seul tenant.

5. Vanne de rotation selon l'une quelconque des revendications 1 à 4, **caractérisée en ce que** le corps longitudinal (16) comprend une pluralité d'éléments de corps longitudinal (21) empilés dans une direction axiale.

6. Vanne de rotation selon la revendication 5, **caractérisée en ce qu'**au moins quelques-uns des éléments de corps longitudinal (21) sont configurés comme des pièces identiques.

7. Vanne de rotation selon l'une quelconque des revendications précédentes, **caractérisée en ce que** le bloc de commutation est traversé, dans une direction axiale, par un arbre tournant (18), où en particulier l'arbre (18) est configuré comme un tirant d'ancrage servant au maintien de plusieurs composants (16, 21, 24, 31) du bloc de commutation, lesdits composants étant disposés les uns derrière les autres axialement.

8. Vanne de rotation selon l'une quelconque des revendications précédentes, **caractérisée en ce que** le bloc de commutation est logé en rotation, côté extrémité, via un élément de palier, où en particulier l'élément de palier présente un joint de rotation servant à assurer l'étanchéité par rapport au fluide.

9. Vanne de rotation selon l'une quelconque des revendications précédentes, **caractérisée en ce que** les arrivées et les évacuations sont au moins au nombre de quatre, en particulier au moins au nombre de huit.

10. Pompe à chaleur comprenant
une pluralité d'éléments creux (1), où dans chacun des éléments creux (1) se trouvent au moins une première zone (A) et une deuxième zone (B) servant au déplacement d'un moyen de travail disposé dans l'élément creux (1), en fonction de grandeurs concernant l'état thermodynamique,
où chacun des éléments creux (1) est relié thermiquement à sa première zone (A) par un premier canal d'écoulement (3) de l'élément creux (1), ledit premier canal d'écoulement étant traversé par un premier fluide, et est relié à sa deuxième zone (B) par un deuxième canal d'écoulement (4) de l'élément creux (1), ledit deuxième canal d'écoulement étant traversé par un deuxième fluide, de sorte que de l'énergie thermique peut à chaque fois être échangée entre l'un des fluides et l'une des zones (A, B), et un agencement de vannes (6, 7), où les canaux d'écoulement de l'une des zones peuvent être reliés entre eux séquentiellement, grâce à l'agencement des vannes (6, 7), et une suite de l'interconnexion se modifie au cours d'un fonctionnement de la pompe à chaleur, au moyen de l'agencement des vannes (6, 7), **caractérisée**
**en ce que** l'agencement des vannes (6, 7) comprend une vanne de rotation selon l'une quelconque des revendications précédentes.

11. Pompe à chaleur selon la revendication 10, **caractérisée en ce que** les éléments creux (1) sont configurés comme des éléments adsorbants, où les éléments adsorbants présentent, dans l'espace de la première zone (A), un espace d'adsorption / de désorption pour le moyen de travail, et présentent, dans l'espace de la deuxième zone (B), un espace de condensation / d'évaporation pour le moyen de travail.

12. Pompe à chaleur selon la revendication 10 ou 11, **caractérisée en ce qu'**au moins l'un des canaux d'écoulement présente, côté extrémité, des pièces de raccordement (15), où le fluide est réparti, dans l'espace des pièces de raccordement (15), sur une pluralité de chemins d'écoulement (14).

13. Pompe à chaleur selon l'une quelconque des revendications 10 à 12, **caractérisée en ce qu'**un ou plusieurs chemins d'écoulement (14) est ou sont configuré(s) pour le fluide à travers une fente située entre des éléments inférieurs (10) disposés les uns sur les autres.

14. Pompe à chaleur selon l'une quelconque des revendications 10 à 13, **caractérisée en ce que** les chemins de circulation (14) sont dotés de structures, en particulier d'ailettes, agrandissant la surface.

15. Pompe à chaleur selon l'une quelconque des revendications 10 à 14, **caractérisée en ce que** les éléments creux (1) sont configurés à chaque fois comme des modules séparés qui, en particulier, ne sont pas en contact thermique les uns avec les autres.

16. Pompe à chaleur selon la revendication 15, **caractérisée en ce qu'**une couche d'un matériau thermoisolant, en particulier élastique, est disposée entre des éléments creux (1) adjacents.

17. Pompe à chaleur selon l'une quelconque des revendications 10 à 16, **caractérisée en ce que** l'agencement des vannes est conçu comme une interconnexion d'un nombre de vannes discrètes, à plusieurs voies, en particulier actionnées électromagnétiquement.

18. Pompe à chaleur selon l'une quelconque des revendications 10 à 17, **caractérisée en ce que** l'agencement des vannes comprend au moins une, en particulier au moins deux vannes de rotation (100) selon l'une quelconque des revendications 1 à 9.

19. Pompe à chaleur selon la revendication 18, **caractérisée en ce qu'**au moins quelques-uns des canaux d'écoulement des éléments creux (1) sont reliés aux arrivées et / ou évacuations (6c, 6d, 30) de la vanne de rotation (100), par des pièces de raccordement élastiques et déformables.

20. Pompe à chaleur selon l'une quelconque des revendications 10 à 19, **caractérisée en ce que** le second fluide est de l'air.

21. Pompe à chaleur selon l'une quelconque des revendications 10 à 20, **caractérisée en ce que** la vanne de rotation (100) du second fluide dispose d'un bloc de commutation (24) ayant une paroi de séparation (25) de forme hélicoïdale réalisée de façon étagée, où en particulier un nombre d'étages de la forme hélicoïdale correspond à un nombre d'éléments creux (1).

22. Pompe à chaleur selon la revendication 21, **caractérisée en ce que** le bloc de commutation (24) est conçu en se composant d'une pluralité d'éléments de bloc de commutation (49, 50) disposés axialement les uns derrière les autres et, en particulier, configurés comme des pièces identiques.

23. Pompe à chaleur selon l'une quelconque des revendications 10 à 22, **caractérisée en ce que** le second fluide est réparti sur les deuxièmes zones (B) des éléments creux (1), par une vanne de rotation (100) ayant deux canaux d'écoulement (44, 45).
